# EUROPÄISCHE PATENTSCHRIFT

(11) **EP 4 124 204 B1**
(45) Veröffentlichungstag und Bekanntmachung des Hinweises auf die Patenterteilung: **10.09.2025**
(21) Anmeldenummer: 21736981.8
(22) Anmeldetag: 17.06.2021
(51) Int. Cl.: F16J 15/00, F16J 15/26

(54) **DICHTUNGSVORRICHTUNG, DICHTUNGSSYSTEM UND VERFAHREN ZUM ABDICHTEN EINER LECKAGE-STRÖMUNG AN EINEM MASCHINENELEMENT**
SEAL DEVICE, SEAL SYSTEM, AND METHOD FOR SEALING A LEAKAGE FLOW ON A MACHINE ELEMENT
DISPOSITIF D'ÉTANCHÉITÉ, SYSTÈME D'ÉTANCHÉITÉ ET PROCÉDÉ D'ÉTANCHÉIFICATION D'UN ÉCOULEMENT DE FUITE SUR UN ÉLÉMENT DE MACHINE

(43) Veröffentlichungstag der Anmeldung: 01.02.2023
(73) Patentinhaber: HERMETIK HYDRAULIK AB, 182 61 Djursholm (SE)
(72) Erfinder: GAYDOUL, Jürgen, 182 61 Djursholm (SE)
(74) Vertreter: Zenz Patentanwälte Partnerschaft mbB
(86) Internationale Anmeldenummer: PCT/EP2021/066387
(87) Internationale Veröffentlichungsnummer: WO 2022/262978

(56) Entgegenhaltungen:
- DE-A1- 102015 107 772
- DE-A1- 102016 210 173
- DE-A1- 2 063 822
- JP-A- S5 980 568
- RU-C1- 2 084 730
- US-A- 3 334 906
- US-A- 4 629 196

## Beschreibung

### Gebiet der Erfindung

Die Erfindung bezieht sich auf eine Dichtungsvorrichtung, auf ein Dichtungssystem und auf ein Verfahren zum Abdichten einer Leckage-Strömung an einem Maschinenelement, insbesondere zum Abdichten einer Leckage-Strömung an einem rotierenden oder linear bewegten Maschinenelement, welches zum Beispiel bei Drehdurchführungen für Wellen oder Körper für Spritzdüsen an Entzunderungsanlagen mit rotierenden Düsenköpfen oder bei linearen Bewegungen an Verdrängerpumpen oder bei Maschinen für die Druckerzeugung zur Anwendung kommt. Weitere, denkbare Anwendungsfälle für die Erfindung können die Reinigung von Behältern, Pipelines und Rohren in Wärmeaustauschern in der Prozessindustrie, die Oberflächenbearbeitung in der Stahl-, Aluminium und Metallindustrie und viele andere Hochdruckapplikationen sein, wie beispielsweise die Lackentfernung an Schiffen und Konstruktionen, die Betonsanierung, dem Bergbau und dem Tunnelbau.

### Hintergrund

Aus der RU 2 084 730 C1 ist eine Gleitringdichtungsanordnung mit hintereinander angeordneten Arbeitsstufen und einer Endstufe bekannt, von denen jede ein auf der Welle angeordnetes Rotorelement und ein damit in Kontakt stehendes, federbelastetes, axial bewegliches Statorelement aufweist, welches durch einen O-Ring gegen das Gehäuse abgedichtet ist. Die Hoch- und Niederdruckhohlräume der Arbeitsstufen sind in Reihe geschaltete Drosseleinrichtungen, wobei in dem Gehäuse parallel zur Achse der Welle abgestufte zylindrische Bohrungen vorgesehen sind, die einen Hochdruckhohlraum mit kleinerem Durchmesser und einen Niederdruckhohlraum mit großem Durchmesser bilden, in denen bewegliche abgestufte zylindrische Kolben montiert sind, die in den Bohrungen mit größerem und kleinerem Durchmesser abgedichtet sind, um das Ende des Kolbens mit kleinerem Durchmesser mit dem Statorelement in Eingriff zu bringen.

Die JP S59 80568 A offenbart eine Möglichkeit zur Vermeidung des Austretens von Hochdruckgas durch Bereitstellung eines Wellendichtungskastens und eines Hochdruckbegrenzungsventils um eine Kurbelwelle einer Hochdruck-Hubkolbenmaschine herum. Bei einem Kurbelwellengehäuse tritt Hochdruckgas in eine Hochdruck-Grenzventilöffnung und in einen Wellendichtungskasten ein. Der Wellendichtungskasten ist in der Lage, einen gewissen Druckwert abzudichten, wobei sich das Hochdruckbegrenzungsventil bei Überschreitung öffnet, um den Differenzdruck durch einen Auslass in einen Wellendichtungskasten und eine Hochdruckbegrenzungsventilöffnung zu leiten. Wenn der Differenzdruck den gewissen Druckwert übersteigt, wird der Differenzdruck gegen den abdichtbaren Druck des Wellendichtungsgehäuses durch den Auslass zu einer Auslassöffnung geleitet. Bei sequentieller Zuführung eines Gasdifferenzdrucks, der höher ist als der abdichtbare Druck des Wellendichtungsgehäuses, kann das Austreten von Hochdruckgas in dem Kurbelwellengehäuse vollständig verhindert werden.

Aus der DE 10 2016 210173 A1 ist eine Gleitringdichtungsanordnung bekannt, welche eine erste Gleitringsichtung mit einem rotierenden Gleitring und einem stationären Gleitring aufweist, welche zwischen sich einen Dichtspalt definieren. Die erste Gleitringdichtung dichtet den Dichtraum gegenüber einem Umgebungsbereich ab. Die Anordnung umfasst ferner eine erste Kolbenanordnung mit einem Kolbenelement und flexiblen Wandbereichen, welche einen ersten Kolbeninnenraum definieren, wobei der erste Kolbeninnenraum mit dem ersten Dichtraum fluidverbunden ist. Eine Kolbenaußenfläche des Kolbenelements steht in Fluidverbindung mit dem Umgebungsbereich, wobei die Anordnung noch eine erste Vorspanneinrichtung aufweist, welhe eine erste Vorspannkraft auf das Kolbenelement der ersten Kolbenanordnung ausübt.

Die US 4 629 196 A offenbart eine Kupplungs- und Verteileranordnung, die es ermöglicht, eine Welle und Laufräder einer Umwälzpumpe einer Absorptionskältemaschine mit einem externen Antriebsmittel anstelle eines hermetisch abgedichteten Antriebsmittels zu drehen. Die Anordnung umfasst eine Verbindungskombination aus einer Vielzahl von Drosselöffnungen, einer Vielzahl von Magnetschaltern, einer Leitung und einer Vielzahl von Kammern, um ein Differentialvakuum über eine Dichtungsfläche einer doppelten mechanischen Drehdichtung bereitzustellen, damit die Einbringung von Luft in das Vakuum der Absorptionskältemaschine während des Betriebs und/oder des Abschaltens der Absorptionskältemaschine verhindert wird.

Aus der US 3 334 906 A ist eine Wellendichtungsanordnung zur Abdichtung einer pulsierenden Fluidströmung von einer Seite eines Gehäuses zu einer anderen Seite bekannt, wobei sich die Welle durch einen Hohlraum in dem Gehäuse erstreckt. Die Anordnung weist eine Vielzahl von axial ausgerichteten Dichtungsschalen mit Dichtungsringen auf, welche die Welle umgeben. Es sind Druckventile zwischen den Dichtungsringen angeordnet, damit bei jedem Druckimpuls kleinere Druckmengen von dem ersten Dichtungsring zu dem benachbarten Dichtungsring fließen können.

Schließlich ist aus der DE 20 63 822 A1 eine Anordnung zur Abdichtung zwischen zwei zueinander beweglichen Teilen offenbart, bei denen der eine Teil eine zum anderen Teil hin offene Ringnut zur Aufnahme eines elastischen Dichtungsringes aufweist, welcher mit seiner dem anderen Teil zugekehrten Umfangsseite auf dem anderen Teil mit einer Auflagekante aufliegt. Dabei sind mehrere Ringnuten mit jeweils einem Dichtungsring pneumatisch hintereinander angeordnet, wobei jeder Ringnut ein pneumatischer Nebenpfad parallel geschaltete ist, in welchem jeweils ein auf einen Teildruck des gesamten abzudichtenden Druckpotentials ansprechendes Überdruckventil eingeschaltet ist.

Bei einem beispielhaften Anwendungsfall der Erfindung arbeiten Anlagen für die Entzunderung von Metallkörpern, wie sie beispielsweise in der Stahl- oder Aluminiumherstellung zum Einsatz kommen, mit hohen Wasserdrücken im Bereich von 1000 bar bis hin zu 4000 bar. Hydraulische Dichtungen für diese Anlagen zur Entzunderung, die solchen hohen Wasserdrücken standhalten, stellen eine besondere Herausforderung dar, wenn mittels einer Drehdurchführung rotierend bewegliche Maschinenelemente abgedichtet werden müssen. Bei Anlagen zur Entzunderung sind diese Maschinenelemente die rotierenden Düsenköpfe, wobei bei Anlagen zur Druckerzeugung die Maschinenelemente Kolben oder Plunger sind, welche eine lineare Bewegung durchführen.

Der Erfindung liegt die Aufgabe zugrunde eine Lösung zu schaffen, die auf konstruktiv einfache Weise eine wartungsarme und verlustarme Dichtung bereitstellt, welche beispielsweise für Entzunderungsanlagen mit rotierenden Düsenköpfen oder Druckerzeugungsanlagen mit linear bewegten Kolben oder Plungern geeignet ist.

### Überblick über die Erfindung

Diese Aufgabe wird mit einer Dichtungsvorrichtung mit den Merkmalen gemäß dem Patentanspruch 1 gelöst.

Die erfindungsgemäße Dichtungsvorrichtung zum Abdichten einer Leckage-Strömung an einem im Querschnitt kreisrunden Maschinenelement einer mit einem unter einem hohen Druck stehenden Arbeits-Fluid arbeitenden Arbeitsmaschine umfasst ein röhrenförmig ausgebildetes Gehäuse, welches ein Stromauf-Ende und ein Stromab-Ende aufweist und durch welches sich das im Querschnitt kreisrunde Maschinenelement hindurch erstrecken kann, eine Stromauf-Druckkammer, welche an dem Stromauf-Ende des Gehäuses angeordnet ist, eine Stromab-Druckkammer, welche an dem Stromab-Ende des Gehäuses angeordnet ist, ein zwischen der Stromauf-Druckkammer und der Stromab-Druckkammer angeordnetes Dichtungselement, welches innerhalb des Gehäuses gelagert ist und welches an dem sich zu dem Dichtungselement relativ bewegenden Maschinenelement zumindest abschnittsweise dichtend anliegt, eine um das Dichtungselement herum verlaufend ausgebildete Umgehungsleitung, welche zumindest abschnittsweise innerhalb des Gehäuses verlaufend angeordnet ist und welche die Stromauf-Druckkammer mit der Stromab-Druckkammer strömungsverbindend ausgebildet ist, und ein einen Druck eines von der Stromauf-Druckkammer durch die Umgehungsleitung zu der Stromab-Druckkammer strömenden Leckage-Fluids um eine vorbestimmte Druckdifferenz reduzierend ausgebildetes Drossel-Element, welches zwischen der Stromauf-Druckkammer und der Stromab-Druckkammer in der Umgehungsleitung angeordnet ist, wobei es sich bei dem Leckage-Fluid um einen Teil des unter dem hohen Druck stehenden Arbeits-Fluids handelt. Das Gehäuse ist an seinem Stromab-Ende mit einem radial einwärts gerichteten Abstütz-Kragen ausgebildet, an welchem das Dichtungselement anliegt. Das Dichtungselement weist einen ersten Stützring, einen zweiten Stützring und ein zwischen dem ersten Stützring und dem zweiten Stützring angeordnetes Dichtungsmittel auf, wobei der zweite Stützring an dem Abstütz-Kragen anliegt. Das Dichtungselement und das Gehäuse sind auf Basis der vorbestimmten Druckdifferenz relativ zueinander bewegbar gelagert.

Ebenso wird die der Erfindung zugrunde liegende Aufgabe durch ein Dichtungssystem mit den Merkmalen gemäß dem Patentanspruch 10 gelöst.

Das erfindungsgemäße Dichtungssystem umfasst eine Eingangs-Dichtungseinheit mit den Merkmalen der Dichtungseinheit nach einem der Ansprüche 1 bis 9, eine Ausgangs-Dichtungseinheit mit den Merkmalen der Dichtungseinheit nach einem der Ansprüche 1 bis 9, und ein im Querschnitt kreisrundes und sich in eine Axialrichtung erstreckendes Maschinenelement einer Arbeitsmaschine, welche mit einem unter einem hohen Druck stehenden Arbeits-Fluid arbeitend ausgebildet ist, wobei die Eingangs-Dichtungseinheit und die Ausgangs-Dichtungseinheit mit Bezug auf die Axialrichtung des Maschinenelements hintereinanderliegend in Reihe angeordnet sind und die jeweiligen Dichtungselemente der Eingangs-Dichtungseinheit und der Ausgangs-Dichtungseinheit an dem sich zu dem jeweiligen Dichtungselement relativ bewegenden Maschinenelement zumindest abschnittsweise abdichtend anliegen.

Auch wird die der Erfindung zugrunde liegende Aufgabe durch ein Verfahren mit den Merkmalen gemäß dem Patentanspruch 17 gelöst.

Bei dem erfindungsgemäßen Verfahren zum Abdichten einer Leckage-Strömung an einem im Querschnitt kreisrunden Maschinenelement einer mit einem unter einem hohen Druck stehenden Arbeits-Fluid arbeitenden Arbeitsmaschine unter Verwendung wenigstens einer Dichtungsvorrichtung nach einem der Ansprüche 1 bis 9 wird das Dichtungselement der wenigstens einen Dichtungsvorrichtung dichtend in Anlage an das im Querschnitt kreisrunde und sich in eine Axialrichtung erstreckende Maschinenelement gebracht wird. Dann wird mittels des Leckage-Fluids der Leckage-Strömung ein erster Druck in der Stromauf-Druckkammer der wenigstens einen Dichtungsvorrichtung eingestellt, wonach dann mittels des in der Umgehungsleitung angeordneten Drossel-Elements ein zweiter, vorbestimmter Druck in der Stromab-Druckkammer der wenigstens einen Dichtungsvorrichtung eingestellt wird. Dann werden durch eine durch den ersten Druck und den zweiten, vorbestimmten Druck erzielte Druckdifferenz das Dichtungselement und das Gehäuse mit einer abdichtenden Kraft gegeneinander verschoben.

Vorteilhafte und zweckmäßige Ausgestaltungen und Weiterbildungen der Erfindung ergeben sich aus den entsprechenden Unteransprüchen.

Durch die Erfindung wird eine Möglichkeit bereitgestellt, durch welche die Dichtungsvorrichtung einen hohen Druck eines aus einem Arbeits-Fluid hervorgehenden Leckage-Fluids in der Stromauf-Druckkammer über die Umgehungsleitung und das Drossel-Element derart reduziert, dass der Druck des Leckage-Fluids in der Stromab-Druckkammer kleiner ist als in der Stromauf-Druckkammer. Dabei üben der Druck in der Stromauf-Druckkammer und der Druck in der Stromab-Druckkammer eine abdichtende Kraft auf das Dichtungselement aus, welche das Maschinenelement zuverlässig abdichtet. Auf diese Weise wird eine Dichtungsvorrichtung bereitgestellt, welche unter Beaufschlagung mit Druck dynamisch ihre abdichtende Wirkung entfaltet und den Bereich zwischen dem Dichtungselement und dem Maschinenelement zuverlässig und sicher abdichtet. Die abdichtende Wirkung basiert auf der auf das Dichtungselement wirkenden Druckkraft des Leckage-Fluids und somit auf der Druckdifferenz zwischen der Stromauf-Druckkammer und der Stromab-Druckkammer. Dabei kann mittels des Drossel-Elements der anliegende Druck des Leckage-Fluids in der Stromauf-Druckkammer nur teilweise abgebaut werden, so dass auch in der Stromab-Druckkammer ein gegenüber einem Umgebungsdruck noch deutlich erhöhter Druck des Leckage-Fluids vorliegen kann. Dementsprechend liegt dann an dem Dichtungselement nicht der volle, möglicherweise sehr hohe Druck des Leckage-Fluids an, sondern ein reduzierter Druck, welcher einer Druckdifferenz zwischen der Stromauf-Druckkammer und der Stromab-Druckkammer entspricht. Eine solche Verminderung des auf das Dichtungselement wirkenden Drucks verbessert das Abdichtverhalten des Dichtungselements und wirkt sich vorteilhaft auf die Lebensdauer des Dichtungselements und der Dichtungsvorrichtung aus. Während bei aus dem Stand der Technik bekannten Dichtungen für die Spaltströmung die Volumenverluste durch die Leckage-Strömung bei 20% bis 50% liegen, werden durch die erfindungsgemäße Dichtungsvorrichtung diese Volumenverluste um ein Vielfaches auf etwa 2% bis 5% reduziert, so dass entsprechend weniger Energie von einer diesbezüglichen Arbeitsmaschine aufgewandt werden muss, um die Volumenverluste zu kompensieren. Die erfindungsgemäße Lösung stellt auf diese Weise eine Dichtungsvorrichtung bereit, welche selbst hohe Drücke zuverlässig und mit geringen Fluidverlusten abdichtet und dabei verschleiß- und wartungsarm ist. Mit der erfindungsgemäßen Dichtungsvorrichtung lässt sich eine wirksame, verschleißarme Abdichtung auch bei hohen Drücken erreichen. Dadurch, dass das Gehäuse an seinem Stromab-Ende mit einem radial einwärts gerichteten Abstütz-Kragen ausgebildet ist, an welchem das Dichtungselement anliegt, verhindert der Abstütz-Kragen folglich, dass das Dichtungselement infolge des Druckes der Leckage-Strömung unkontrolliert stromab gedrängt wird. Vielmehr definiert der Abstütz-Kragen einer vorgegebenen und maximalen Stromab-Position des Dichtungselements innerhalb des Gehäuses der Dichtungsvorrichtung. Gemäß der Erfindung weist das Dichtungselement einen ersten Stützring, einen zweiten Stützring und ein zwischen dem ersten Stützring und dem zweiten Stützring angeordnetes Dichtungsmittel auf, wobei der zweite Stützring an dem Abstütz-Kragen anliegt. Diese Ausbildung ist konstruktiv besonders günstig in Bezug auf ein robustes und langlebiges Dichtungselement. Insbesondere kann hierbei der erste Stützring mit der Stromauf-Druckkammer in Fluidverbindung stehen oder von der Stromauf-Druckkammer mit Druck beaufschlagt werden und/oder der zweite Stützring mit der Stromab-Druckkammer in Fluidverbindung stehen oder von der Stromab-Druckkammer mit Druck beaufschlagt werden. Auf diese Weise können die Stromauf-Druckkammer über den ersten Stützring und die Stromab-Druckkammer über den zweiten Stützring wirkungsvoll eine abdichtende Kraft auf das dazwischenliegende Dichtungsmittel ausüben. Gleichzeitig wird das beidseitig durch den ersten Stützring und durch den zweiten Stützring flankierte Dichtungsmittel wirksam gegenüber Verschleiß geschützt. Hierbei kann das Dichtungsmittel derart ausgebildet sein, dass das Dichtungsmittel bei Beaufschlagung der Stromauf-Druckkammer und der Stromab-Druckkammer mit Druck dynamisch gegen das Gehäuse abdichtet. Dabei kann im Sinne der Erfindung ein Drossel-Element jedes Element sein, welches dazu eingerichtet ist, den Druck in der Stromab-Druckkammer durch ein vorbestimmtes Drosseln des Drucks in der Stromauf-Druckkammer aus dem Druck der Stromauf-Druckkammer abzuleiten. Ferner kann im Sinne der Erfindung die Umgehungsleitung jede Art von Verbindung sein, welche direkt oder indirekt einen Transport von Leckage-Fluid zwischen der Stromauf-Druckkammer und der Stromab-Druckkammer ermöglicht. Schließlich ist im Sinne der Erfindung unter dem sich zu dem Dichtungselement relativ bewegenden Maschinenelement ein Maschinenelement zu verstehen, welches eine rotierende Bewegung oder eine axiale Bewegung ausführt, so dass die Bewegung des Maschinenelements in jedem Fall relativ zu dem Dichtungselement erfolgt.

Bei der Erfindung ist vorgesehen, dass das Dichtungselement und das Gehäuse relativ zueinander bewegbar gelagert sind. Entsprechend können der Druck in der Stromab-Druckkammer und/oder der Druck in der Stromauf-Druckkammer eine abdichtende Kraft entlang einer Axialrichtung der Dichtungsvorrichtung bzw. des Maschinenelements ausüben, wobei alternativ oder zusätzlich der Druck in der Stromab-Druckkammer und/oder der Druck in der Stromauf-Druckkammer auch eine abdichtende Kraft entlang einer Radialrichtung der Dichtungsvorrichtung bzw. des Maschinenelements ausüben können.

Dementsprechend ist in Ausgestaltung der Erfindung vorgesehen, dass infolge der vorbestimmten Druckdifferenz das Gehäuse und das Dichtungselement abdichtend gegeneinander verschiebbar gelagert sind, wodurch sich das Maschinenelement auf diese Weise selbst bei hohen Drücken zuverlässig und sicher dynamisch abdichten lässt, wenn die Dichtungsvorrichtung mit Druck beaufschlagt wird. Folglich verschieben der Druck der Stromauf-Druckkammer und der Druck der Stromab-Druckkammer das Gehäuse und das Dichtungselement abdichtend gegeneinander, wobei der Druck der Stromauf-Druckkammer und der Druck der Stromab-Druckkammer das Gehäuse und das Dichtungselement entlang einer Axialrichtung der Dichtungsvorrichtung und/oder des Maschinenelements abdichtend gegeneinander verschieben können. Auf diese Weise lässt sich eine besonders wirksame dynamische Dichtwirkung bei Beaufschlagung der Dichtungsvorrichtung mit Druck erzielen, wobei die Dichtwirkung sich selbsttätig und abhängig von der Größe des anliegenden Drucks anpasst.

Erfindungsgemäß kann der Druck in der Stromab-Druckkammer und damit die durch ihn hervorgerufene abdichtende Kraft mit dem Druck der Stromauf-Druckkammer zunehmen, was insbesondere eine lineare Zunahme sein kann. Die abdichtende Wirkung der erfindungsgemäßen Dichtungsvorrichtung vergrößert sich damit selbsttätig bei steigendem Druck des Arbeits-Fluids und bewirkt eine zuverlässige Abdichtung sowohl in Axialrichtung als auch in Radialrichtung der Dichtungseinheit bzw. des Maschinenelements.

In Ausgestaltung der Erfindung können die Dichtungsvorrichtung und das Maschinenelement koaxial zueinander angeordnet sein, so dass Axialrichtungen und/oder Radialrichtungen von Dichtungsvorrichtung und Maschinenelement zusammenfallen.

Gemäß einer Ausführungsform der Erfindung ist das Drossel-Element derart ausgebildet, dass die Druckdifferenz zwischen dem Druck der Stromauf-Druckkammer und dem Druck der Stromab-Druckkammer höchstens ein Viertel des Druckes der Stromauf-Druckkammer, besonders bevorzugt ein Sechstel des Druckes der Stromauf-Druckkammer, beträgt. Somit sind der Druck der Stromab-Druckkammer hinreichend hoch und die Druckdifferenz zwischen dem Druck der Stromauf-Druckkammer und der Stromab-Druckkammer hinreichend niedrig, um ein zuverlässiges, verschleißarmes Abdichten selbst bei hohen Arbeits-Fluid-Drücken in der Größenordnung von beispielsweise 1000 bar bis 6000 bar oder mehr zu realisieren. Insbesondere kann das Drossel-Element derart ausgebildet sein, dass bei mehreren, in Reihe hintereinanderliegend angeordneten und ein Dichtungssystem bildenden Dichtungsvorrichtungen die Druckdifferenz zwischen dem Druck einer jeweiligen Stromauf-Druckkammer und dem Druck einer jeweiligen Stromab-Druckkammer 800 bar, vorzugsweise 250 bar bis 600 bar, beträgt. Mit der erfindungsgemäßen Dichtungsvorrichtung lassen sich Druckdifferenzen in dieser Größenordnung zuverlässig und verschleißarm abdichten, selbst gegenüber drehenden Maschinenelementen.

Die Erfindung sieht in weiterer Ausgestaltung vor, dass das Dichtungselement zumindest abschnittsweise an dem Gehäuse anliegend angeordnet ist. Dadurch, dass das Dichtungselement sowohl an dem sich relativ zu dem Dichtungselement bewegenden Maschinenelement als auch an dem Gehäuse zumindest abschnittsweise anliegt, ist eine definierte bzw. vorgegebene und damit kontrollierbare Führung der Leckage-Strömung gegeben, welche kontrolliert und vorgegeben durch die Umgehungsleitung strömt.

Hinsichtlich der definierten bzw. vorgegebenen und damit kontrollierbaren Führung der Leckage-Strömung ist es von Vorteil, wenn wenigstens ein Dichtungskörper vorgesehen ist, welcher zwischen dem Dichtungselement und dem Gehäuse abdichtend angeordnet ist.

Hinsichtlich vorteilhafter Standzeiten sieht die Erfindung in weiterer Ausgestaltung vor, dass das Dichtungselement Kunststoff-Fasern, Polyaramid-Fasern, Kohlefasern oder Kevlar-Fasern aufweist.

In einer Ausgestaltung der Erfindung können die Stromauf-Druckkammer und/oder die Stromab-Druckkammer zumindest teilweise innerhalb des Gehäuses aufgenommen sein.

Gemäß einer alternativen Ausgestaltung können die Stromauf-Druckkammer und/oder die Stromab-Druckkammer zumindest teilweise außerhalb des Gehäuses angeordnet sein.

Ferner kann gemäß einer Ausgestaltung der Erfindung das Dichtungselement an einer Oberseite des Gehäuses angeordnet sein, wobei das Dichtungselement beispielsweise an einer Oberseite des Gehäuses angebracht bzw. in eine solche Oberseite des Gehäuses aufgenommen sein kann.

Alternativ dazu kann in einer Ausgestaltung der Erfindung das Dichtungselement beweglich gegenüber dem Gehäuse gelagert sein und/oder mit dem Gehäuse in Kontakt stehen.

In einer Ausgestaltung der Erfindung können ferner der erste Stützring und/oder der zweite Stützring fest oder lösbar mit dem Dichtungsmittel verbunden sein.

Hinsichtlich einer definierten bzw. vorgegebenen und damit kontrollierbaren Führung der Leckage-Strömung ist es in weiterer Ausgestaltung der Erfindung von Vorteil, wenn wenigstens ein erstes Abdichtungsmittel zwischen dem ersten Stützring und dem Gehäuse dichtend angeordnet ist. Ebenso ist es von Vorteil, wenn gemäß einer Ausgestaltung der Erfindung wenigstens ein zweites Abdichtungsmittel zwischen dem zweiten Stützring und dem Gehäuse dichtend angeordnet ist. Die Abdichtungsmittel können zum Beispiel als O-Ringe ausgebildet sein.

Zur Aufrechterhaltung einer wirkungsvollen Dichtwirkung über einen längeren Betriebszeitraum sieht die Erfindung in Ausgestaltung vor, dass der erste Stützring mit einer in Richtung des zweiten Stützrings wirkenden Federkraft beaufschlagt gelagert ist.

Eine Erleichterung des Einsatzes der Dichtungsvorrichtung kann in Ausgestaltung dadurch realisiert werden, indem in der Umgehungsleitung zwischen dem Stromauf-Ende und dem Drossel-Element ein Filter-Element angeordnet ist. Auf diese Weise muss das Arbeits-Fluid, aus welchem die Leckage-Strömung hervorgeht, keine besonderen Reinheitsanforderungen erfüllen.

Besondere Vorteile der Erfindung ergeben sich, wenn mehrere erfindungsgemäße Dichtungsvorrichtungen sukzessive in Reihe angeordnet sind, wie es für das erfindungsgemäße Dichtungssystem vorgesehen ist. Auf diese Weise lassen sich selbst hohe Drücke sukzessive bzw. in Kaskaden abbauen und dabei die Belastung bzw. der Verschleiß der Dichtungselemente der einzelnen Dichtungsvorrichtungen gering halten. Dementsprechend umfasst das erfindungsgemäße Dichtungssystem eine Mehrzahl von in Reihe angeordneten Dichtungsvorrichtungen.

Damit der Druck der Leckage-Strömung in gewünschter und vorgegebener Weise abgebaut werden kann und ein aufstauender Druck vermieden wird, sieht die Erfindung in Ausgestaltung des Dichtungssystems vor, dass die Stromab-Druckkammer der in Strömungsrichtung des Leckage-Fluids betrachtet stromabliegenden Ausgangs-Dichtungsvorrichtung mit einem Leckage-Fluid-Ablauf verbunden ist.

Bei dem erfindungsgemäßen Dichtungssystem kann die Stromauf-Druckkammer der jeweils nach-geschalteten Dichtungsvorrichtung mit der Stromab-Druckkammer der jeweils vorgeschalteten Dichtungsvorrichtung in Fluidverbindung stehen bzw. teilweise oder vollständig zusammenfallen. Auf diese Weise lassen sich mehrere Dichtungsvorrichtungen effizient zu einer Kaskade hintereinanderschalten, um hohe Drücke sukzessive abbauen zu können.

Dementsprechend ist in Ausgestaltung des erfindungsgemäßen Dichtungssystems vorgesehen, dass mit Bezug auf die Strömungsrichtung des Leckage-Fluids die Eingangs-Dichtungsvorrichtung stromauf der Ausgangs-Dichtungsvorrichtung liegend angeordnet ist, wobei die Stromab-Druckkammer der Eingangs-Dichtungsvorrichtung der Stromauf-Druckkammer der Ausgangs-Dichtungsvorrichtung entspricht.

Beispielhaft kann bei dem erfindungsgemäßen Dichtungssystem ein erstes Gehäuse, ein erstes Dichtungselement zum Abdichten gegen das Maschinenelement, ein erste Umgehungsleitung (zum Beispiel durch das erste Gehäuse) zwischen einer Stromauf-Druckkammer, welche einem ersten Druck des Leckage-Fluids ausgesetzt ist, und einer Stromab-Druckkammer, und ein erstes Drossel-Element in der ersten Umgehungsleitung vorgesehen sein, wobei das erste Drosselelement dazu eingerichtet ist, in der Stromab-Druckkammer einen Druck einzustellen, welcher kleiner als der Druck in der Stromauf-Druckkammer ist und welcher eine erste abdichtende Kraft auf das erste Dichtungselement ausübt. Ein solches Dichtungssystem umfasst ferner ein zweites Gehäuse, ein zweites Dichtungselement zum Abdichten, eine zweite Umgehungsleitung (zum Beispiel durch das zweite Gehäuse) zwischen der ersten Stromab-Druckkammer und einer weiteren Stromab-Druckkammer, sowie ein zweites Drossel-Element in der zweiten Umgehungsleitung, wobei das Drossel-Element dazu eingerichtet ist, in der weiteren Stromab-Druckkammer einen dritten Druck einzustellen, welcher kleiner als der Druck der stromaufliegenden Stromab-Druckkammer ist und welcher eine zweite abdichtende Kraft auf das zweite Dichtungselement ausübt. Dementsprechend können Dichtungssysteme mit mehr als zwei Dichtungsvorrichtungen in Reihe aufgebaut werden, wobei in einer besonderen Ausgestaltung die Dichtungsvorrichtungen entlang einer gemeinsamen Axialrichtung der Dichtungsvorrichtungen bzw. einer Axialrichtung des Maschinenelements in Reihe angeordnet sein können.

Bei einer Ausgestaltung des erfindungsgemäßen Dichtungssystems ist vorgesehen, dass mit Bezug auf die Strömungsrichtung des Leckage-Fluids die Eingangs-Dichtungsvorrichtung stromauf der Ausgangs-Dichtungsvorrichtung liegend angeordnet ist, wobei zwischen der Eingangs-Dichtungsvorrichtung und der Ausgangs-Dichtungsvorrichtung wenigstens eine Zwischen-Dichtungsvorrichtung mit den Merkmalen der Dichtungsvorrichtung nach einem der Ansprüche 1 bis 12 angeordnet ist, und wobei das Dichtungselement der wenigstens einen Zwischen-Dichtungsvorrichtung an dem sich zu dem Dichtungselement der wenigstens einen Zwischen-Dichtungsvorrichtung relativ bewegenden Maschinenelement zumindest abschnittsweise abdichtend anliegt.

Für die zuletzt beschriebene Ausgestaltung kann eine effiziente Hintereinanderschaltung dadurch realisiert werden, indem die Stromab-Druckkammer der wenigstens einen, benachbart zu der Ausgangs-Dichtungsvorrichtung angeordneten Zwischen-Dichtungsvorrichtung der Stromauf-Druckkammer der Ausgangs-Dichtungsvorrichtung entspricht, und wobei die Stromauf-Druckkammer der wenigstens einen, benachbart zu der Eingangs-Dichtungsvorrichtung angeordneten Zwischen-Dichtungsvorrichtung der Stromab-Druckkammer der Eingangs-Dichtungsvorrichtung entspricht.

Eine besonders kompakte Bauweise für ein solches Dichtungssystem ist in Ausgestaltung der Erfindung dadurch realisierbar, wenn die Eingangs-Dichtungsvorrichtung und/oder die Ausgangs-Dichtungsvorrichtung und/oder die wenigstens eine Zwischen-Dichtungsvorrichtung in einem gemeinsamen Dichtungsgehäuse aufgenommen sind.

Gemäß einer Ausführungsform kann das Maschinenelement drehend und/oder axial beweglich in Bezug auf die Dichtungsvorrichtungen gelagert sein.

Gewünschte und vorgegebene Druckdifferenzen lassen sich durch Anpassung des Drossel-Elements der einzelnen, hintereinanderliegend angeordneten Dichtungsvorrichtungen erreichen. Dabei ist es in Ausgestaltung der Erfindung denkbar, dass das Drossel-Element der stromaufliegenden Eingangs-Dichtungsvorrichtung einen Durchflussquerschnitt aufweist, welcher größer ist als ein Durchflussquerschnitt des Drossel-Elements der stromabliegenden Ausgangs-Dichtungsvorrichtung.

Bei dem erfindungsgemäßen Verfahren zum Abdichten einer Leckage-Strömung an einem im Querschnitt kreisrunden Maschinenelement, welches zu einer Arbeitsmaschine gehört, welche mit einem unter einem hohen Druck stehenden Arbeits-Fluid arbeitet, wird ein Dichtungselements an dem Maschinenelement bereitgestellt, dann wird eine Stromauf-Druckkammer bereitgestellt, welche einem ersten Druck des Leckage-Fluids ausgesetzt ist. Danach wird eine Stromab-Druckkammer bereitgestellt, welche der Stromauf-Druckkammer bezüglich des Dichtungselements entgegengesetzt ist, wobei dann ein Druck in der Stromab-Druckkammer eingestellt wird, welcher kleiner als der Druck in der Stromauf-Druckkammer ist und welcher eine abdichtende Kraft auf das Dichtungselement ausübt. Dabei wird die Stromab-Druckkammer mit der Stromauf-Druckkammer strömungsverbunden, was zum Beispiel mittels der Umgehungsleitung realisiert wird.

Dabei umfasst das erfindungsgemäße Verfahren insbesondere die Verwendung zumindest einer Dichtungsvorrichtung gemäß der Patentansprüche 1 bis 12 oder eines Dichtungssystems gemäß der Patentansprüche 13 bis 19. Somit umfasst das Verfahren in weiterer Ausgestaltung das Bereitstellen einer weiteren Dichtungsvorrichtung an dem Maschinenelement, das Bereitstellen einer noch weiteren Stromab-Druckkammer, und das Einstellen eines dritten Drucks in der noch weiteren Stromab-Druckkammer, wobei dieser Druck kleiner als der Druck der stromaufliegenden Stromauf-Druckkammer ist und welcher eine abdichtende Kraft auf die noch weitere Dichtungsvorrichtung ausübt.

Somit ist gemäß einer Ausgestaltung des erfindungsgemäßen Verfahrens vorgesehen, dass wenigstens eine weitere Dichtungsvorrichtung zusätzlich zu und stromab der wenigstens einen Dichtungsvorrichtung eingebaut wird, wobei die weitere zusätzliche Dichtungsvorrichtung dichtend in Anlage an das im Querschnitt kreisrunde und sich in eine Axialrichtung erstreckende Maschinenelement gebracht wird, und wobei mit der stromaufliegenden Dichtungsvorrichtung eine Druckdifferenz erzielt wird, welche gleich der Druckdifferenz ist, welche mit der einen weiteren zusätzlichen Dichtungsvorrichtung erzielt wird.

Bei dem erfindungsgemäßen Verfahren wird dabei der Druck in der Stromab-Druckkammer aus dem Druck in der Stromauf-Druckkammer abgeleitet, was zum Beispiel durch Drosseln des Druckes in der Stromauf-Druckkammer mittels eines Drossel-Elements realisiert wird.

Bei der Erfindung kann das abzudichtende Maschinenelement je nach Anwendung der Erfindung jedes beliebige Element einer Vorrichtung oder Maschine sein. In einigen Ausführungsformen kann dabei das Maschinenelement eine Rohrleitung sein, in welche ein Fluid eingespeist wird und deren Umgebung bzw. Mantel gegen das Fluid druckabgedichtet werden soll. Einige solche Anwendungen betreffen eine Drehdurchführung für ein rotierendes Rohr. In anderen, denkbaren Ausführungsformen kann das Maschinenelement axial beweglich sein, wie zum Beispiel ein axial beweglicher Kolben, dessen Mantel gegenüber einem Zylinder druckabgedichtet werden soll. Ganz allgemein kann das Maschinenelement je nach Ausführungsform drehend und/oder axial beweglich gegenüber der Dichtungsvorrichtung gelagert sein. Fluide im Sinne der vorliegenden Erfindung können Flüssigkeiten und/oder Gase umfassen. Schließlich ist eine Umgehungsleitung im Sinne der Erfindung jeder potenzielle Durchgang oder Kanal für das Leckage-Fluid, für welches die erfindungsgemäße Abdichtung, d.h. die Dichtungsvorrichtung und das Dichtungssystem, geschaffen ist.

Es versteht sich, dass die vorstehend genannten und nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen. Der Rahmen der Erfindung ist nur durch die Ansprüche definiert.

### Kurze Beschreibung der Zeichnungen

Weitere Einzelheiten, Merkmale und Vorteile des Gegenstandes der Erfindung ergeben sich aus der nachfolgenden Beschreibung im Zusammenhang mit der Zeichnung, in der beispielhaft bevorzugte Ausführungsbeispiele der Erfindung dargestellt sind. In der Zeichnung zeigt:
Figur 1 eine schematische Querschnittsansicht eines rotierenden Düsenkopfes einer Arbeitsmaschine zur Entzunderung mit Drehdurchführung, wobei die Arbeitsmaschine mehrere erfindungsgemäße Dichtungsvorrichtungen aufweist, welche ein erfindungsgemäßes Dichtungssystem bilden,
Figur 2 eine vergrößerte Schnittansicht für das Dichtungssystem aus Figur 1,
Figur 3 eine vergrößerte Schnittansicht A für eine einzelne Dichtungsvorrichtung des Dichtungssystems aus Figur 2, und
Figur 4 eine vergrößerte Schnittansicht B für eine andere Dichtungsvorrichtung des Dichtungssystems aus Figur 2.

### Detaillierte Beschreibung

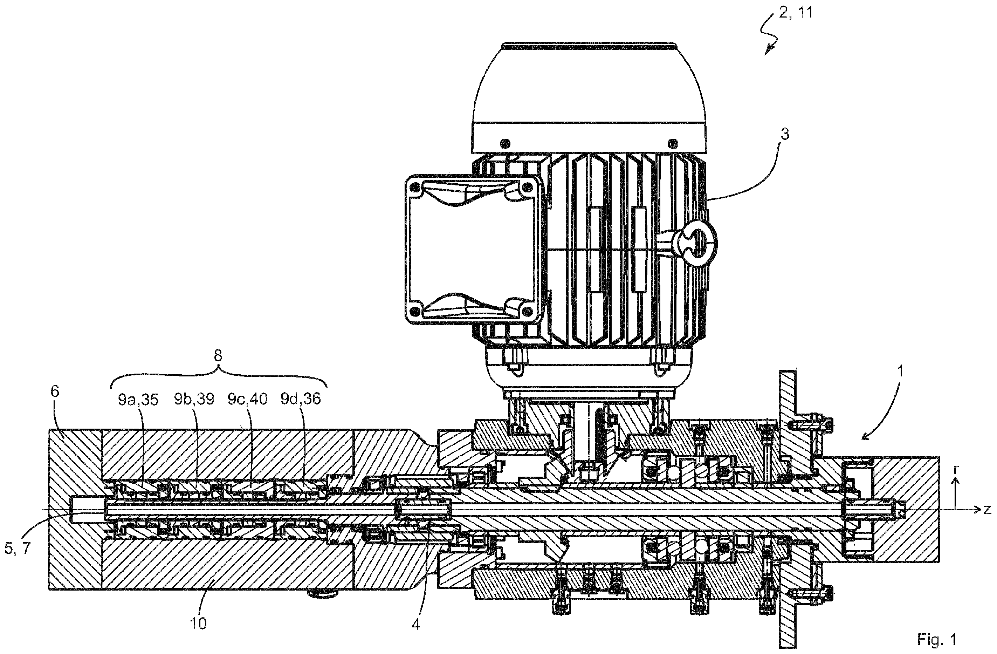

Nachtstehend wird die Erfindung unter Bezugnahme auf die Figuren 1 bis 4 beschrieben, in denen die Erfindung am Beispiel einer Drehdurchführung einer Fluidleitung für eine Entzunderungsvorrichtung erläutert wird. Eine solche Entzunderungsvorrichtung wird in der Stahl- oder AluminiumHerstellung eingesetzt, um Oxid-Ablagerungen mit Hilfe von unter hohem Druck stehenden Wasser von heißen oder kalten Metalloberflächen zu entfernen. In einer solchen Entzunderungsvorrichtung werden die Metalloberflächen an feststehenden oder rotierenden Düsen vorbeigeführt und mit Wasser unter einem hohen Wasserdruck von üblicherweise 1000 bar oder mehr bestrahlt, um den Zunder zu lösen. Aus den Dokumenten US 6,029,681 und US 7,958,609 ist eine derartige Entzunderungsvorrichtung mit rotierenden Düsenköpfen bekannt. Die abzudichtende Fluid-Zuführleitung, durch welche das unter einem hohen Druck stehende und ein Arbeits-Fluid darstellende Wasser zu einem Düsenkopf geführt wird, dreht sich dabei relativ zu einem Dichtungselement, welches dazu dient, die durch die Drehdurchführung resultierende Leckage-Strömung zu minimieren.

Entzunderungsvorrichtungen, insbesondere solche mit rotierenden Fluidleitungen und rotierenden Düsenköpfen, stellen aufgrund der hohen Wasserdrücke und der hohen Volumenströme hohe Anforderungen an die Abdichtung der Fluid-Zuführleitung. Es versteht sich, dass die Erfindung nicht nur auf Entzunderungsvorrichtungen mit rotierenden oder feststehenden Düsenköpfen beschränkt ist, sondern vorteilhaft bei verschiedensten Anwendungen eingesetzt werden kann, bei denen ein sich relativ zu einem Dichtungselement bewegendes Maschinenelement, welches bei der Entzunderungsvorrichtung als die rotierende Fluid-Zuführleitung ausgebildet ist, wirkungsvoll und verschleißarm abgedichtet werden soll. Solche Anwendungen umfassen beispielsweise auch Pumpen oder Kolbenmaschinen, bei denen die relative Bewegung zu dem Dichtungselement eine axiale Bewegung ist.

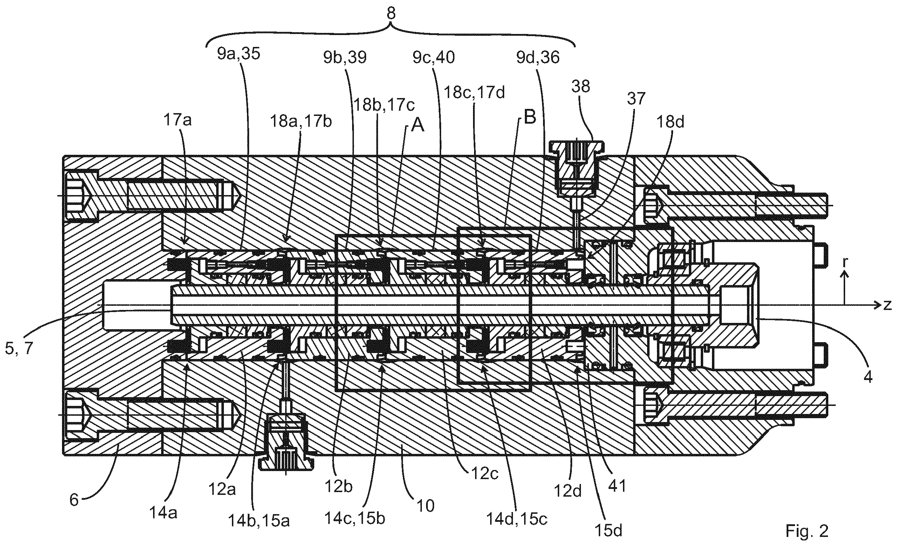

Die Figure 1 zeigt in einer schematischen Schnittansicht einen rotierenden Düsenkopf 1 einer Entzunderungsvorrichtung 2, welche eine Arbeitsmaschine 11 im Sinne der Erfindung darstellt. Der rotierende Düsenkopf 1 wird dabei von einem elektrischen Antrieb 3 der Entzunderungsvorrichtung 2 um die in Figur 1 gezeigte z-Achse rotierend angetrieben, wobei die r-Achse die Radialrichtung angibt. Der rotierende Düsenkopf 1 ist über eine Flanschkupplung 4 mit einer Fluid-Zuführleitung 5 derart starr verbunden, dass die Fluid-Zuführleitung 5 indirekt über den elektrischen Antrieb 3 und die Flanschkupplung 4 ebenfalls rotierend angetrieben wird. Die rotierende Fluid-Zuführleitung 5 wird über einen stationären (nicht-drehenden) Anschlussadapter 6 aus einem Reservoir (nicht gezeigt) mit einem Arbeits-Fluid, beispielsweise Wasser unter hohem Druck in der Größenordnung von bis zu 1000 oder 2000 bar, versorgt. Bei derartigen Entzunderungsvorrichtungen liegen die Durchflussmenge üblicherweise im Bereich von bis zu 200 Liter pro Minute und die Rotationsgeschwindigkeit des rotierenden Düsenkopfes 1 sowie der Fluid-Zuführleitung 5 im Bereich von bis zu 2000 Umdrehungen pro Minute. Dabei stellt die Einspeisung derart großer Mengen des unter diesem hohen Druck stehenden Arbeits-Fluids in eine schnell rotierende Fluid-Zuführleitung 5 sehr hohe Anforderungen an die Lagerung und Abdichtung der Fluid-Zuführleitung 5, welche ein im Querschnitt kreisrundes Maschinenelement 7 im Sinne der Erfindung darstellt. Das in dem Ausführungsbeispiel als eine Hohlwelle ausgebildete Maschinenelement 7 wird über den Anschlussadapter 6 mit dem unter dem hohen Druck stehenden Arbeits-Fluid versorgt, wobei das Fluid, welches nicht in das Maschinenelement 7 gelangt und vielmehr außerhalb und entlang der Hohlwelle strömt, die Leckage-Strömung bzw. das Leckage-Fluid darstellt, bei dem es sich um einen Teil des unter dem hohen Druck stehenden Arbeits-Fluids handelt. Gemäß dem in der Figur 1 gezeigten Ausführungsbeispiel ist die rotierende Fluid-Zuführleitung 5 in einem Dichtungssystem 8 gelagert und abgedichtet, wobei in dem Ausführungsbeispiel das stationäre (nicht-drehende) Dichtungssystem 8 vier Dichtungsvorrichtungen 9a, 9b, 9c und 9d aufweist, welche in einem gemeinsamen Dichtungsgehäuse 10 untergebracht sind und welche nachstehend mit Bezugnahme auf die Figuren 2 bis 4 im Detail beschrieben werden.

Die vier Dichtungsvorrichtungen 9a, 9b, 9c und 9d sind im Wesentlichen baugleich ausgebildet und entlang der z-Achse, welche einer Axialrichtung entspricht, in Strömungsrichtung des Arbeits-Fluids bzw. entlang des Maschinenelements 7 hintereinanderliegend angeordnet. Die nach Art einer Kaskade angeordneten Dichtungsvorrichtungen 9a, 9b, 9c und 9d dienen einerseits zu einer Drehlagerung der um die z-Achse rotierenden Fluid-Zuführleitung 5 bzw. des um die z-Achse rotierenden Maschinenelements 7. Gleichzeitig dichten die Dichtungsvorrichtungen 9a, 9b, 9c und 9d zusammenwirkend den Mantel der Fluid-Zuführleitung 5 bzw. des Maschinenelements 7 gegenüber der Umgebung ab und stellen damit sicher, dass nahezu das gesamte zur Verfügung gestellte und unter einem hohen Druck stehende Arbeits-Fluid aus dem Anschlussadapter 6 in die rotierende Fluid-Zuführleitung 5 bzw. in das sich relativ zu den Dichtungsvorrichtungen 9a, 9b, 9c und 9d bewegende Maschinenelement 7 eintritt und Verluste an die Umgebung vermieden werden.

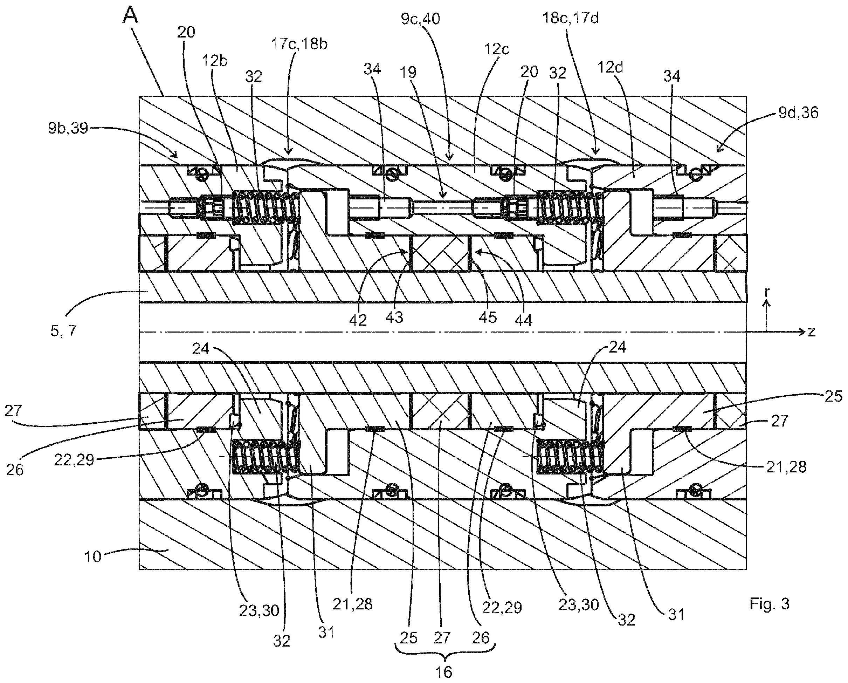

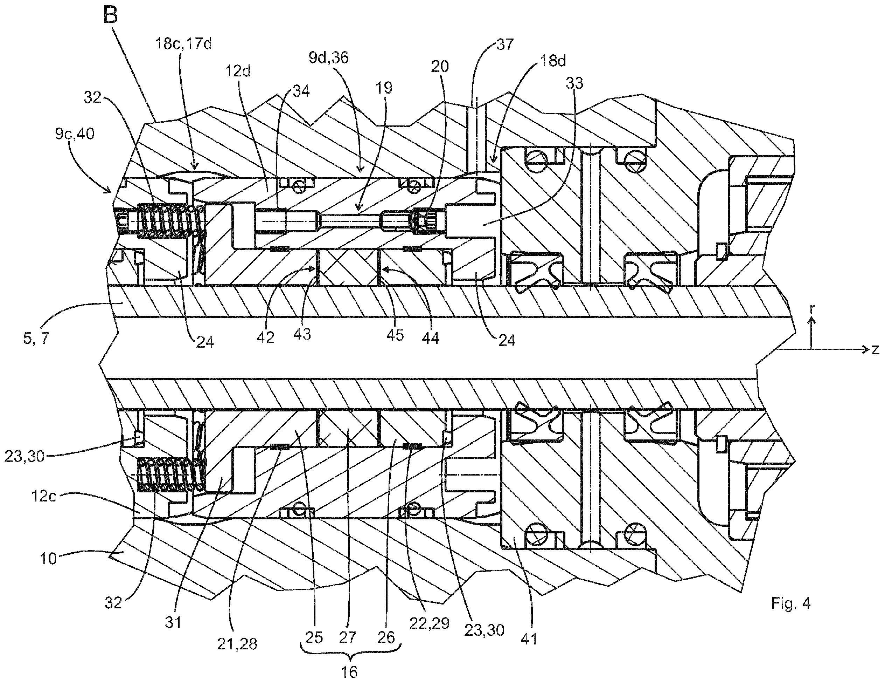

Die Figur 2 zeigt in einer vergrößerten Schnittdarstellung das Dichtungssystem 8 mit den vier Dichtungsvorrichtungen 9a, 9b, 9c und 9d, welche in Reihe liegend in Richtung der z-Achse angeordnet sind und in dem Dichtungsgehäuse 10 untergebracht sind. Es können selbstverständlich auch weniger oder mehr Dichtungsvorrichtungen das Dichtungssystem 8 bilden. Erfindungsgemäß kann eine einzelne Dichtvorrichtung oder jede beliebige Anzahl von Dichtungsvorrichtungen zum Abdichten einer Leckage-Strömung an einem im Querschnitt kreisrunden Maschinenelement 7 einer mit einem unter einem hohen Druck stehenden Arbeits-Fluid arbeitenden Arbeitsmaschine 11 vorgesehen sein. Der Aufbau einer einzelnen Dichtungsvorrichtung ist in weiteren, vergrößerten Schnittansichten in den Figuren 3 und 4 gezeigt, wobei die vergrößerten Ausschnitte in Figur 2 als Ausschnitt A und Ausschnitt B gekennzeichnet sind. Figur 3 zeigt den vergrößerten Ausschnitt A für die Dichtungsvorrichtung 9c, die zwischen den beiden Dichtungsvorrichtungen 9b und 9d angeordnet ist, wohingegen in Figur 4 der vergrößerte Ausschnitt B für die Dichtungsvorrichtung 9d gezeigt ist, welche stromab der Dichtungsvorrichtung 9c angeordnet ist und den Abschluss des Dichtungssystems 8 bildet. Da die Dichtungsvorrichtungen 9a, 9b, 9c und 9d im Wesentlichen den gleichen Aufbau und die gleiche Funktion besitzen, ist die nachstehende Beschreibung der Figuren 3 und 4 allgemeingültig für alle Dichtungsvorrichtungen 9a, 9b, 9c und 9d zu verstehen, auch wenn sich die Beschreibung auf die Dichtungsvorrichtung 9c oder 9d richten sollte. Auf Unterschiede oder Besonderheiten der Dichtungsvorrichtungen 9a, 9b, 9c und 9d wird entsprechend hingewiesen.

Wie insgesamt den Figuren 1 bis 4 für das dargestellte Ausführungsbeispiel zu entnehmen ist, ist eine jeweilige Dichtungsvorrichtung 9a, 9b, 9c und 9d kreiszylinderförmig ausgebildet und umschließt einen Abschnitt des rotierenden Maschinenelements 7, welches in dem Ausführungsbeispiel von der Fluid-Zuführleitung 5 gebildet ist. Jede einzelne Dichtungsvorrichtung 9a, 9b, 9c und 9d weist jeweils ein röhrenförmig bzw. zylinderförmig ausgebildetes Gehäuse 12a, 12b, 12c bzw. 12d auf, welches ein Stromauf-Ende 14a, 14b, 14c bzw. 14d und ein Stromab-Ende 15a, 15b, 15c bzw. 15d aufweist und durch welches sich das im Querschnitt kreisrunde Maschinenelement 7 hindurch erstreckt. Ein jeweiliges Gehäuse 12a, 12b, 12c und 12d erstreckt sich in Richtung der z-Achse, d.h. in Axialrichtung der Arbeitsmaschine 11, entlang des Maschinenelements 7. Ferner umfasst eine jeweilige Dichtungsvorrichtung 9a, 9b,9 c, 9d jeweils ein Dichtungselement 16, welches innerhalb des zugeordneten Gehäuses 12a, 12b, 12c, 12d gelagert ist und welches an dem sich zu dem jeweiligen Dichtungselement 16 relativ bewegenden Maschinenelement 7 zumindest abschnittsweise dichtend anliegend ausgebildet ist. Das jeweilige Dichtungselement 16 erstreckt sich gleichfalls entlang der z-Achse und dichtet den Mantel der rotierenden Fluid-Zuführleitung 5 bzw. des Maschinenelements 7 ab. Bei jeder der Dichtungsvorrichtungen 9a, 9b, 9c, 9d sind das jeweilige Dichtungselement 16 und das zugehörige Gehäuse 12a, 12b, 12c, 12d relativ zueinander bewegbar gelagert. Insbesondere ist das jeweilige Dichtungselement 16 beweglich und relativ zu dem zugeordneten Gehäuse 12a, 12b, 12c, 12d und verschiebbar in dem zugeordneten Gehäuse 12a, 12b, 12c, 12d aufgenommen.

Eine jeweilige Dichtungsvorrichtung 9a, 9b, 9c, 9d weist ferner jeweils eine Stromauf-Druckkammer 17a, 17b, 17c, 17d und jeweils eine Stromab-Druckkammer 18a, 18b, 18c, 18d auf. Dabei ist eine jeweilige Stromauf-Druckkammer 17a, 17b, 17c, 17d an dem zugeordneten Stromauf-Ende 14a, 14b, 14c, 14d des entsprechenden Gehäuses 12a, 12b, 12c, 12d angeordnet, wohingegen eine jeweilige Stromab-Druckkammer 18a, 18b, 18c, 18d an dem zugeordneten Stromab-Ende 15a, 15b, 15c, 15d des entsprechenden Gehäuses 12a, 12b, 12c, 12d angeordnet ist. Das jeweilige Dichtungselement 16 ist zwischen der entsprechenden Stromauf-Druckkammer 17a, 17b, 17c, 17d und der entsprechenden Stromab-Druckkammer 18a, 18b, 18c, 18d angeordnet.

Eine jeweilige Dichtungsvorrichtung 9a, 9b, 9c, 9d weist ferner jeweils eine Umgehungsleitung 19 auf, welche die Stromauf-Druckkammer 17a, 17b, 17c, 17d mit der Stromab-Druckkammer 18a, 18b, 18c, 18d strömungsverbindend ausgebildet ist. Eine jeweilige Umgehungsleitung 19 verläuft bei dem gezeigten Ausführungsbeispiel jeweils innerhalb des zugeordneten Gehäuses 12a, 12b, 12c, 12d, wobei es in alternativer Ausgestaltung auch denkbar ist, dass nur ein Abschnitt der jeweiligen Umgehungsleitung 19 innerhalb des zugeordneten Gehäuses 12a, 12b, 12c, 12d verläuft und der übrige Abschnitt beispielsweise innerhalb des Dichtungsgehäuses 10 oder durch das Dichtungsgehäuse 10 hindurch und außerhalb des Dichtungsgehäuses 10 verläuft. Wichtig für die Erfindung ist es, dass eine jeweilige Umgehungsleitung 19 um das jeweilige Dichtungselement 16, welches zumindest abschnittsweise an dem Maschinenelement 7 anliegt, herum verlaufend angeordnet und ausgebildet ist.

Ferner weist eine jeweilige Dichtungsvorrichtung 9a, 9b, 9c, 9d jeweils ein Drossel-Element 20 auf, welches jeweils in der zugeordneten Umgehungsleitung 19 angeordnet ist. Das jeweilige Drossel-Element 20 ist derart ausgebildet, dass das jeweilige Drossel-Element 20 den Druck des von der zugeordneten Stromauf-Druckkammer 17a, 17b, 17c, 17d durch die entsprechende Umgehungsleitung 19 zu der zugeordneten Stromab-Druckkammer 18a, 18b, 18c, 18d strömenden Leckage-Fluids um eine vorbestimmte Druckdifferenz reduziert. Dementsprechend ist ein jeweiliges Drossel-Element 20 zwischen der zugeordneten Stromauf-Druckkammer 17a, 17b, 17c, 17d und der zugeordneten Stromab-Druckkammer 18a, 18b, 18c, 18d angeordnet. In dem in den Figuren dargestellten Ausführungsbeispiel ist das jeweilige Drossel-Element 20 in der entsprechenden Umgehungsleitung 19 angeordnet, wobei es alternativ auch denkbar ist, dass ein jeweiliges Drossel-Elemente 20 entweder innerhalb des Dichtungsgehäuses 10 oder außen und außerhalb des Dichtungsgehäuses 10 angeordnet ist. Das in der jeweiligen Umgehungsleitung 19 angeordnete Drossel-Element 20 drosselt einen ersten Druck der zugeordneten Stromauf-Druckkammer 17a, 17b, 17c, 17d, so dass die zugeordnete Stromab-Druckkammer 18a, 18b, 18c, 18d mit einem von dem ersten Druck abgeleiteten zweiten Druck beaufschlagt ist, welcher je nach Einstellung des Drossel-Elements 20 um einen vorbestimmten Betrag oder Anteil kleiner als der erste Druck ist. Dabei stellen die Differenz des ersten Drucks und des zweiten Drucks die vorbestimmte Druckdifferenz, welche durch Einstellung des Drossel-Elements 20 vorgegeben wird. Insbesondere sind infolge der vorbestimmten Druckdifferenz das Gehäuse 12a, 12b, 12c oder 12d und das zugeordnete Dichtungselement 16 abdichtend gegeneinander verschiebbar gelagert.

Obgleich in dem in den Figuren dargestellten Ausführungsbeispiel jede der Dichtungsvorrichtungen 9a, 9b, 9c, 9d jeweils eine Umgehungsleitung 19 und ein in der Umgehungsleitung 19 angeordnetes Drossel-Element 20 aufweist, ist es bei alternativer Ausgestaltung auch denkbar, dass jede Dichtungsvorrichtung 9a, 9b, 9c, 9d jeweils mehr als eine Umgehungsleitung 19 und ein Drossel-Element 20 aufweist.

Wie ferner beispielsweise den Figuren 3 und 4 zu entnehmen ist, ist das jeweilige Dichtungselement 16 innerhalb des zugeordneten Gehäuses 12a, 12b, 12c, 12d gelagert, wobei das Dichtungselement 16 sowohl an dem Maschinenelement 7 als auch an dem zugeordneten Gehäuse 12a, 12b, 12c, 12d zumindest abschnittsweise dichtend anliegt. Für eine Abdichtung zwischen dem jeweiligen Dichtungselement 16 und dem zugeordneten Gehäuse 12a, 12b, 12c, 12d sorgen in dem in den Figuren dargestellten Ausführungsbeispiel ein erster Dichtungskörper 21, ein zweiter Dichtungskörper 22 und ein dritter Dichtungskörper 23, die jeweils zwischen dem jeweiligen Dichtungselement 16 und dem zugeordneten Gehäuse 12a, 12b, 12c, 12d abdichtend angeordnet sind. Den Figuren 3 und 4 ist ferner zu entnehmen, dass das jeweilige Gehäuse 12a, 12b, 12c, 12d an seinem jeweiligen Stromab-Ende 15a, 15b, 15c, 15d mit einem radial einwärts gerichteten Abstütz-Kragen 24 ausgebildet ist. An dem jeweiligen Abstütz-Kragen 24 liegt das jeweilige Dichtungselement 16 an, so dass der Abstütz-Kragen 24 als eine Art Anschlag für eine maximale Stromab-Verschiebung des Dichtungselements 16 dient.

Aus den Figuren 3 und 4 ist für die Dichtungsvorrichtungen 9c und 9d ersichtlich, dass ein jeweiliges Dichtungselement 16 einen ersten Stützring 25, einen zweiten Stützring 26 und ein zwischen dem ersten Stützring 25 und dem zweiten Stützring 26 angeordnetes Dichtungsmittel 27 aufweist, wobei die jeweiligen Dichtungselemente 16 der Dichtungsvorrichtungen 9a und 9b ebenfalls jeweils einen ersten Stützring 25, einen zweiten Stützring 26 und ein zwischen dem ersten Stützring 25 und dem zweiten Stützring 26 angeordnetes Dichtungsmittel 27 aufweisen. Das jeweilige Dichtungsmittel 27 ist ringförmig ausgebildet und umschließt die Fluid-Zuführleitung 5 bzw. das Maschinenelement 7. Ferner liegt jeweils der zweite Stützring 26 an dem zugeordneten Abstütz-Kragen 24 des zugeordneten Gehäuses 12a, 12b, 12c, 12d an. Das Dichtungsmittel 27 kann Kunststoff-Fasern, Polyaramid-Fasern, Kohlefasern oder Kevlar-Fasern aufweisen. Der erste Stützring 25 einer jeden Dichtungsvorrichtung 9a, 9b, 9c, 9d steht mit der zugeordneten Stromauf-Druckkammer 17a, 17b, 17c, 17d in Fluidverbindung, wohingegen der zweite Stützring 26 einer jeden Dichtungsvorrichtung 9a, 9b, 9c, 9d mit der zugeordneten Stromab-Druckkammer 18a, 18b, 18c, 18d in Fluidverbindung steht. Mit Bezug auf die Figuren 3 und 4 sind der erste Stützring 25 auf einer dem Dichtungsmittel 27 zugewandten Stirnseite 42 mit einer ersten Abdichtungskontur 43 und der zweite Stützring 27 auf einer dem Dichtungsmittel 27 zugewandten Stirnseite 44 mit einer zweiten Abdichtungskontur 44 ausgebildet. Die erste Abdichtungskontur 43 und/oder die zweite Abdichtungskontur 45 weisen jeweils eine raue Kontur auf und sind dabei derart ausgebildet, dass sich das zwischen dem ersten Stützring 25 und dem zweiten Stützring 26 angeordnete Dichtungsmittel 27 in die erste Abdichtungskontur 43 und/oder in die zweite Abdichtungskontur 44 einfrisst, wodurch eine sichere Abdichtung und ein sicherer Halt des Dichtungsmittels 27 zwischen dem ersten Stützring 25 und dem zweiten Stützring 26 gewährleistet ist und wodurch verhindert wird, dass sich das Dichtungsmittel 27 in Richtung des zugeordneten Gehäuses 12a, 12b, 12c, 12d oder in Richtung der Fluid-Zuführungsleitung 5 bzw. des Maschinenelements 7 bewegt. Als raue Kontur im Sinne der Erfindung ist dabei eine Oberflächenbeschaffenheit zu verstehen, bei welcher die Abdichtungskontur 43 und/oder die Abdichtungskontur 44 mit einer nicht-glatten Oberfläche ausgebildet sind.

Ferner entsprechen der erste Dichtungskörper 21 einem ersten Abdichtungsmittel 28 und der zweite Dichtungskörper 22 einem zweiten Abdichtungsmittel 29. Das erste Abdichtungsmittel 28 ist hierbei als ein O-Ring ausgebildet, welcher beispielsweise in einer Nut eingelegt ist und welcher zwischen dem ersten Stützring 25 und dem zugeordneten Gehäuse 12a, 12b, 12c, 12d dichtend angeordnet ist, wobei das zweite Abdichtungsmittel 29 ebenfalls als ein O-Ring ausgebildet ist, welcher auch in beispielsweise einer Nut eingelegt ist und welcher aber zwischen dem zweiten Stützring 26 und dem zugeordneten Gehäuse 12a, 12b, 12c, 12d dichtend angeordnet ist. Ein drittes Abdichtungsmittel 30 entspricht bei dem dargestellten Ausführungsbeispiel dem dritten Dichtungskörper 23 und ist zwischen dem zweiten Stützring 26 und dem Abstütz-Kragen 24 eines zugeordneten Gehäuses 12a, 12b, 12c, 12d angeordnet.

Wie insbesondere den Figuren 3 und 4 zu entnehmen ist, ist der erste Stützring 25 mit einer in Richtung des zweiten Stützrings 26 wirkenden Federkraft beaufschlagt gelagert. Zu diesem Zweck ist der erste Stützring 25 jedes Dichtungselements 16 an seinem dem zweiten Stützring 26 abgewandten Ende mit einem Andrück-Kragen 31 ausgebildet. Gegen diesen Andrück-Kragen 31 drückt ein Federelement 32 und erzeugt die Federkraft, welche in Richtung des zweiten Stützrings 26 wirkt. Dabei ist ein jeweiliges Federelement 32 in einer Ausnehmung 33 gelagert, welcher in einem stromaufliegend angeordneten Gehäuse 9a, 9b, 9c ausgebildet ist. In Figur 4 ist eine solche Ausnehmung 33 auch in dem Gehäuse 9d ausgebildet, wobei hier kein Federelement vorgesehen ist, da stromab des Gehäuses 9d kein weiteres Gehäuse mit einem Dichtungselement vorhanden ist. Vielmehr liegt der Abstütz-Kragen 24 des Gehäuses 12d an einer Gehäuse-Endabdeckung 41 an. Insgesamt drückt folglich bei jeder Dichtungsvorrichtung 9a, 9b, 9c, 9d das Federelement 32 den ersten Stützring 25 in Richtung des zweiten Stützrings 26, welcher dadurch gegen den Abstütz-Kragen 24 gedrückt wird und dort anliegt, wobei hierbei das zwischen dem ersten Stützring 25 und dem zweiten Stützring 26 liegende Dichtungsmittel 27 komprimiert wird. Obgleich in den Figuren nur ein Federelement 32 gezeigt ist, welches auf den ersten Stützring 25 einer jeweiligen Dichtungsvorrichtung 9a, 9b, 9c, 9d drückt, so können auch mehrere Federelemente 32 an einer Axialposition in Umfangsrichtung des ersten Stützrings 25 angeordnet sein und auf den ersten Stützring 25 einwirken. Das Federelement 12 bzw. die Federelemente 12 dienen zur Nachstellung einer jeweiligen Dichtungsvorrichtung 9a, 9b, 9c, 9d bei Verschleiß des zugehörigen Dichtungselements 16.

Zusätzlich ist bei dem in den Figuren dargestellten Ausführungsbeispiel in einer jeden Umgehungsleitung 19 ein Filter-Element 34 vorgesehen. Das Filter-Element 34 ist dabei zwischen dem entsprechenden Stromauf-Ende 14a, 14b, 14c, 14d und dem zugeordneten Drossel-Element 20 angeordnet und sichert die Funktionsweise des jeweiligen Drossel-Elements 20, indem Verunreinigungen des Leckage-Fluids gefiltert werden, wodurch zum Beispiel eine Verstopfung des jeweiligen Drossel-Elements 20 verhindert wird und wodurch keine besondere Aufmerksamkeit der Reinheit des Arbeits-Fluids geschenkt werden muss.

Die Stromauf-Druckkammer 17a der Dichtungsvorrichtung 9a ist durch den Bereich stromauf der Dichtungsvorrichtung 9a definiert. Die anderen Stromauf-Druckkammern 17b, 17c, 17d der Dichtungsvorrichtungen 9b, 9c, 9d sind durch eine stromaufwärts gelegene Seitenfläche der betrachteten Dichtungsvorrichtung 9b, 9c, 9d selbst, durch die stromaufwärts vorgeschaltete Dichtungsvorrichtung 9a bzw. 9b bzw. 9c, durch eine Innenwand des Dichtungsgehäuses 10 und den Mantel der Fluid-Zuführleitung 5 bzw. des Maschinenelements 7 begrenzt. Die Stromab-Druckkammern 18a, 18b, 18c, 18d sind entsprechend durch eine stromabwärts angeordnete Seitenfläche der betrachteten Dichtungsvorrichtung 9a, 9b, 9c, 9d selbst, durch die stromabwärts nachgeschaltete Dichtungsvorrichtung 9b bzw. 9c bzw. die Gehäuse-Endabdeckung 41 (im Fall der Dichtungsvorrichtung 9d), durch eine Innenwand des Dichtungsgehäuses 10 und den Mantel der Fluid-Zuführleitung 5 bzw. des Maschinenelements 7 begrenzt. Andererseits gilt für jede der Stromauf-Druckkammern 17a, 17b, 17c, 17d, dass diese jeweils durch einen stromaufliegenden Bereich der Ringspalte stromauf des zugehörigen Drossel-Elements 20 definiert sind, wohingegen sich die Stromab-Druckkammern 18a, 18b, 18c, 18d durch den stromabliegenden Bereich der Ringspalte stromab des zugehörigen Drossel-Elements 20 definieren.

Die vorstehende Beschreibung richtete sich auf die bauliche Ausgestaltung einer jeweiligen Dichtungsvorrichtung 9a, 9b, 9c, 9d, wobei die Dichtungsvorrichtungen 9a, 9b, 9c, 9d baugleich ausgebildet sind. Die vier Dichtungsvorrichtungen 9a, 9b, 9c, 9d bilden bei dem in den Figuren gezeigten Ausführungsbeispiel das Dichtungssystem 8 aus. Dabei stellt die Dichtungsvorrichtung 9a eine Eingangs-Dichtungsvorrichtung 35 dar, wohingegen die Dichtungsvorrichtung 9d eine Ausgangs-Dichtungsvorrichtung 36 darstellt. Wie der Figur 2 zu entnehmen ist, sind die Eingangs-Dichtungsvorrichtung 35 und die Ausgangs-Dichtungsvorrichtung 36 mit Bezug auf die Axialrichtung des Maschinenelements 7, d.h. der Fluid-Zuführleitung 5, hintereinanderliegend in Reihe angeordnet, wobei das Dichtungselement 16 der Eingangs-Dichtungsvorrichtung 35 und das Dichtungselement 16 der Ausgangs-Dichtungsvorrichtung 36 an dem Maschinenelement 7, welches sich zu dem jeweiligen Dichtungselement 16 relativ bewegt, abschnittsweise abdichtend anliegen. Damit sich der Druck des Leckage-Fluids bzw. der Leckage-Strömung nicht aufstaut, ist die Stromab-Druckkammer 18d der Ausgangs-Dichtungsvorrichtung 36 mit einem Leckage-Fluid-Ablauf 37 verbunden. Am stromabseitigen Ende des Leckage-Fluid-Ablaufs 37 ist in dem in den Figuren gezeigten Ausführungsbeispiel eine Drossel 38 vorgesehen, durch welche nochmals eine Druckdifferenz gegenüber dem Atmosphärendruck eingestellt werden kann, wobei die Druckdifferenz hierbei mindestens 5 bar bis 50 bar, vorzugsweise 15 bar bis 25 bar, beträgt. Der Abstütz-Kragen 24 der Dichtungsvorrichtung 9d bzw. der Ausgangs-Dichtungsvorrichtung 36 liegt an der Gehäuse-Endabdeckung 41 an, wie es in den Figuren 2 und 4 gezeigt ist.

Bei dem aus der Figur 2 ersichtlichen Dichtungssystem 8 ist mit Bezug auf die Strömungsrichtung des Leckage-Fluids die Eingangs-Dichtungsvorrichtung 35 stromauf der Ausgangs-Dichtungsvorrichtung 36 liegend angeordnet. Würden bei dem Ausführungsbeispiel die mittleren Dichtungsvorrichtungen 9b und 9c entfallen, dann würde die Stromab-Druckkammer 18a der Eingangs-Dichtungsvorrichtung 35 der Stromauf-Druckkammer 17d der Ausgangs-Dichtungsvorrichtung 36 entsprechen. Bei dem Ausführungsbeispiel sind aber zwischen der Eingangs-Dichtungsvorrichtung 35 und der Ausgangs-Dichtungsvorrichtung 36 eine erste Zwischen-Dichtungsvorrichtung 39, welche die Dichtungsvorrichtung 9b ist, und eine zweite Zwischen-Dichtungsvorrichtung 40, welche die Dichtungsvorrichtung 9c ist, angeordnet. Das Dichtungselement 16 der ersten Zwischen-Dichtungsvorrichtung 39 und das Dichtungselement 16 der zweiten Zwischen-Dichtungsvorrichtung 40 liegen an dem Maschinenelement 7 abschnittsweise abdichtend an. Die Eingangs-Dichtungsvorrichtung 35, die Ausgangs-Dichtungsvorrichtung 36, die erste Zwischen-Dichtungsvorrichtung 39 und die zweite Zwischen-Dichtungsvorrichtung 40 sind in dem Dichtungsgehäuse 10 aufgenommen. Es ist ersichtlich, dass statt der beiden Zwischen-Dichtungsvorrichtungen 39 und 40 auch nur eine einzige Zwischen-Dichtungsvorrichtung oder mehr als zwei Zwischen-Dichtungsvorrichtungen vorgesehen sein können. Allgemein gilt bei einem Dichtungssystem 8 mit Eingangs-, Ausgangs- und Zwischen-Dichtungsvorrichtungen, dass die Stromab-Druckkammer 18c der benachbart zu der Ausgangs-Dichtungsvorrichtung 36 angeordneten Zwischen-Dichtungsvorrichtung 40 der Stromauf-Druckkammer 17d der Ausgangs-Dichtungsvorrichtung 36 entspricht, wobei die Stromauf-Druckkammer 17b der benachbart zu der Eingangs-Dichtungsvorrichtung 35 angeordneten Zwischen-Dichtungsvorrichtung 39 der Stromab-Druckkammer 18a der Eingangs-Dichtungsvorrichtung 35 entspricht. Ferner kann das Drossel-Element 20 der stromaufliegenden Eingangs-Dichtungsvorrichtung 35 einen Durchflussquerschnitt aufweisen, welcher größer ist als ein Durchflussquerschnitt des Drossel-Elements 20 der stromabliegenden Ausgangs-Dichtungsvorrichtung 36 und/oder der Zwischen-Dichtungsvorrichtungen 39, 40.

Während des Betriebs des Dichtungssystems 8 wird Fluid, wie beispielsweise Wasser, unter hohem Druck in den Anschlussadapter 6 und von dort in die rotierende Fluid-Zuführleitung 5 eingespeist. Die Stromauf-Druckkammer 17a der ersten Dichtungsvorrichtung 9a bzw. der Eingangs-Dichtungsvorrichtung 35 wird dadurch mit hohem Druck beaufschlagt und gibt diesen hohen Druck über die Umgehungsleitung 19 und durch das Drossel-Element 20 vermindert in die Stromab-Druckkammer 18a weiter. Zwischen der Stromauf-Druckkammer 17a und der Stromab-Druckkammer 18a stellt sich auf diese Weise eine Druckdifferenz ein, welche das Gehäuse 12a und das Dichtungselement 16 entlang der Axialrichtung bzw. z-Achse einander entgegengerichtet verschiebt, so dass dadurch das Dichtungselement 16 gegen das Gehäuse 12a abdichtet. Zudem führt die Druckbeaufschlagung der Stromauf-Druckkammer 17a und der Stromab-Druckkammer 18a gegen das umgebende Dichtungsgehäuse 10 zu einem radial nach innen gerichteten Druck, welcher auf das Dichtungselement 16 und gegen den Mantel der rotierenden Fluid-Zuführleitung 5 bzw. des rotierenden Maschinenelements 7 wirkt. Die Fluid-Zuführleitung 5 wird dadurch sowohl in Axialrichtung (siehe z-Achse in den Figuren) als auch in Radialrichtung (siehe r-Achse in den Figuren) wirksam abgedichtet. Die Abdichtung ist dynamisch, weil sie auf einer Druckbeaufschlagung der Stromauf-Druckkammer 17a und der Stromab-Druckkammer 18a, welche letztendlich auf die Einspeisung des druckbeaufschlagten Arbeits-Fluids in die Fluid-Zuführleitung 5 zurückgeht, beruht. Je höher der Druck in der Stromauf-Druckkammer 17a, desto höher im Allgemeinen auch der Druck in der Stromab-Druckkammer 18a, und desto wirksamer erfolgt die Abdichtung. Das vorstehend beschriebene Prinzip der Abdichtung in Axialrichtung und in Radialrichtung aufgrund der vorbestimmten Druckdifferenz gilt selbstverständlich auch für die Dichtungsvorrichtungen 9b, 9c und 9d. Im abgedichteten Zustand liegt an dem Dichtungselement 16 nicht der volle Druck des Arbeits-Fluids an, sondern nur die Druckdifferenz zwischen der jeweiligen Stromauf-Druckkammer 17a, 17b, 17c, 17d und entsprechenden Stromab-Druckkammer 18a, 18b, 18c, 18d. Der verminderte Druckabfall verbessert die Abdichtung und schützt das Dichtungselement 16 vor Verschleiß. Auf diese Weise wird auch die Leckage-Strömung gemindert und die Lebensdauer der Dichtungseinheit erhöht.

Durch Hintereinanderschalten der Dichtungsvorrichtungen 9a, 9b, 9c, 9d in Reihe, wie es in Figur 2 gezeigt ist, lässt sich bei dem Dichtungssystem 8 der hohe Druck in dem Anschlussadapter 6 sukzessive abbauen. Beträgt der Ausgangsdruck in dem Anschlussadapter 6 beispielsweise 1000 bar, kann die Druckdifferenz zwischen der jeweiligen Stromauf-Druckkammer 17a, 17b, 17c, 17d und der zugehörigen Stromab-Druckkammer 18a, 18b, 18c, 18d pro jeweiliger Dichtungsvorrichtung 9a, 9b, 9c, 9d auf ca. 250 bar eingestellt werden, wobei die Einstellung über das jeweilige Drossel-Element 20 erfolgt. Durch HintereinanderSchaltung der vier Dichtungsvorrichtungen 9a, 9b, 9c, 9d in Reihe, von denen jede einzelne Dichtungsvorrichtung 9a, 9b, 9c, 9d einen Druck von 250 bar abbaut, lässt sich über die gesamte Länge des Dichtungssystems 8 der hohe Druck am Anschlussadapter 6 vollständig abbauen und gleichzeitig eine Leckage-Strömung wirkungsvoll minimieren. Beträgt der Durchfluss durch die Fluid-Zuführleitung 5 beispielsweise 200 Liter pro Minute, lässt sich mit dem gezeigten Dichtungssystem 8 mit einer Kaskade von vier Dichtungsvorrichtungen 9a, 9b, 9c, 9d in Reihe eine Leckage-Menge von weniger als 1 Liter pro Minute, d.h. weniger als 0,5 % des Durchflusses durch die Fluid-Zuführleitung 5, erzielen. Das verbliebene Leckage-Fluid wird über den Leckage-Fluid-Ablauf 37 abgeführt, wobei der Leckage-Fluid-Ablauf 37 mit der Stromab-Druckkammer 18d der Dichtungsvorrichtung 9d verbunden ist. Es sei erwähnt, dass als Arbeits-Fluid und damit auch als Leckage-Fluid neben Wasser auch Emulsionen, Öle oder andere chemische Flüssigkeiten verwendet werden können.

Gemäß dem erfindungsgemäßen Verfahren zum Abdichten einer Leckage-Strömung an dem im Querschnitt kreisrunden Maschinenelement 7 einer mit einem unter einem hohen Druck stehenden Arbeits-Fluid arbeitenden Arbeitsmaschine 11 unter Verwendung wenigstens einer der vorstehend beschriebenen Dichtungsvorrichtung 9a, 9b, 9c, 9d wird das Dichtungselement 16 zumindest einer der Dichtungsvorrichtungen 9a, 9b, 9c, 9d dichtend in Anlage an das im Querschnitt kreisrunde und sich in eine Axialrichtung erstreckende Maschinenelement 7 gebracht. Dann wird mittels des Leckage-Fluids der Leckage-Strömung ein erster Druck in der Stromauf-Druckkammer 17a, 17b, 17c, 17d der entsprechenden Dichtungsvorrichtung 9a, 9b, 9c, 9d eingestellt. Anschließend wird mittels des in der Umgehungsleitung 19 angeordneten Drossel-Elements 20 ein zweiter, vorbestimmter Druck in der Stromab-Druckkammer 18a, 18b, 18c, 18d der entsprechenden Dichtungsvorrichtung 9a, 9b, 9c, 9d eingestellt. Dabei werden durch eine durch den ersten Druck und den zweiten, vorbestimmten Druck erzielte Druckdifferenz das Dichtungselement 16 und das zugehörige Gehäuse 12a, 12b, 12c, 12d mit einer abdichtenden Kraft gegeneinander verschoben. Bei dem Verfahren kann dann wenigstens eine weitere Dichtungsvorrichtung 9b, 9c, 9d zusätzlich zu und stromab der wenigstens einen Dichtungsvorrichtung 9a eingebaut werden, wobei die weitere zusätzliche Dichtungsvorrichtung 9b, 9c, 9d dichtend in Anlage an das im Querschnitt kreisrunde und sich in eine Axialrichtung erstreckende Maschinenelement 7 gebracht wird. Dabei wird mit der stromaufliegenden Dichtungsvorrichtung 9a eine Druckdifferenz erzielt, welche gleich der Druckdifferenz ist, welche mit der einen weiteren zusätzlichen Dichtungsvorrichtung 9b, 9c, 9d erzielt wird.

Die vorstehend beschriebene Erfindung ist selbstverständlich nicht auf die beschriebene und dargestellte Ausführungsform beschränkt. Es ist ersichtlich, dass an der in der Zeichnung dargestellten Ausführungsform zahlreiche, dem Fachmann entsprechend der beabsichtigten Anwendung naheliegende Abänderungen vorgenommen werden können, ohne dass dadurch der Bereich der Erfindung verlassen wird. Auch wenn in der Zeichnung die Erfindung anhand eines rotierendes Maschinenelements dargestellt und beschrieben ist, so wird der Fachmann erkennen, dass die Erfindung auch auf axial bewegte Maschinenelemente angewandt werden kann. Zur Erfindung gehört alles dasjenige, was in der Beschreibung enthalten und/oder in der Zeichnung dargestellt ist, einschließlich dessen, was abweichend von dem konkreten Ausführungsbeispiel für den Fachmann nahegelegt, wobei die Erfindung nur durch die Ansprüche begrenzt ist.

### Bezugszeichenliste

- 1: Rotierender Düsenkopf
- 2: Entzunderungsvorrichtung
- 3: Elektrischer Antrieb
- 4: Flanschkupplung
- 5: Fluid-Zuführleitung
- 6: Anschlussadapter
- 7: Maschinenelement
- 8: Dichtungssystem
- 9a-d: Dichtungsvorrichtungen
- 10: Dichtungsgehäuse
- 11: Arbeitsmaschine
- 12a-d: Gehäuse
- 14a-d: Stromauf-Ende
- 15a-d: Stromab-Ende
- 16: Dichtungselement
- 17a-d: Stromauf-Druckkammer
- 18a-d: Stromab-Druckkammer
- 19: Umgehungsleitung
- 20: Drossel-Element
- 21: erster Dichtungskörper
- 22: zweiter Dichtungskörper
- 23: dritter Dichtungskörper
- 24: Abstütz-Kragen
- 25: erster Stützring
- 26: zweiter Stützring
- 27: Dichtungsmittel
- 28: erstes Abdichtungsmittel
- 29: zweites Abdichtungsmittel
- 30: drittes Abdichtungsmittel
- 31: Andrück-Kragen
- 32: Federelement
- 33: Ausnehmung
- 34: Filter-Element
- 35: Eingangs-Dichtungsvorrichtung
- 36: Ausgangs-Dichtungsvorrichtung
- 37: Leckage-Fluid-Ablauf
- 38: Drossel
- 39: erste Zwischen-Dichtungsvorrichtung
- 40: zweite Zwischen-Dichtungsvorrichtung
- 41: Gehäuse-Endabdeckung
- 42: Stirnseite
- 43: erste Abdichtungskontur
- 44: Stirnseite
- 45: zweite Abdichtungskontur

## Patentansprüche

1. Dichtungsvorrichtung (9a, 9b, 9c, 9d) zum Abdichten einer Leckage-Strömung an einem im Querschnitt kreisrunden Maschinenelement (7) einer mit einem unter einem hohen Druck stehenden Arbeits-Fluid arbeitenden Arbeitsmaschine (11), wobei die Dichtungsvorrichtung (9a, 9b, 9c, 9d) aufweist:
• ein röhrenförmig ausgebildetes Gehäuse (12a, 12b, 12c, 12d), welches ein Stromauf-Ende (14a, 14b, 14c, 14d) und ein Stromab-Ende (15a, 15b, 15c, 15d) aufweist und durch welches sich das im Querschnitt kreisrunde Maschinenelement (7) hindurch erstrecken kann,
• eine Stromauf-Druckkammer (17a, 17b, 17c, 17d), welche an dem Stromauf-Ende (14a, 14b, 14c, 14d) des Gehäuses (12a, 12b, 12c, 12d) angeordnet ist,
• eine Stromab-Druckkammer (18a, 18b, 18c, 18d), welche an dem Stromab-Ende (15a, 15b, 15c, 15d) des Gehäuses (12a, 12b, 12c, 12d) angeordnet ist,
• ein zwischen der Stromauf-Druckkammer (17a, 17b, 17c, 17d) und der Stromab-Druckkammer (18a, 18b, 18c, 18d) angeordnetes Dichtungselement (16), welches innerhalb des Gehäuses (12a, 12b, 12c, 12d) gelagert ist und welches an dem sich zu dem Dichtungselement (16) relativ bewegenden Maschinenelement (7) zumindest abschnittsweise dichtend anliegt,
• eine um das Dichtungselement (16) herum verlaufend ausgebildete Umgehungsleitung (19), welche zumindest abschnittsweise innerhalb des Gehäuses (12a, 12b, 12c, 12d) verlaufend angeordnet ist und welche die Stromauf-Druckkammer (17a, 17b, 17c, 17d) mit der Stromab-Druckkammer (18a, 18b, 18c, 18d) strömungsverbindend ausgebildet ist, und
• ein einen Druck eines von der Stromauf-Druckkammer (17a, 17b, 17c, 17d) durch die Umgehungsleitung (19) zu der Stromab-Druckkammer (18a, 18b, 18c, 18d) strömenden Leckage-Fluids um eine vorbestimmte Druckdifferenz reduzierend ausgebildetes Drossel-Element (20), welches zwischen der Stromauf-Druckkammer (17a, 17b, 17c, 17d) und der Stromab-Druckkammer (18a, 18b, 18c, 18d) in der Umgehungsleitung (19) angeordnet ist, wobei es sich bei dem Leckage-Fluid um einen Teil des unter dem hohen Druck stehenden Arbeits-Fluids handelt,
wobei das Gehäuse (12a, 12b, 12c, 12d) an seinem Stromab-Ende (15a, 15b, 15c, 15d) mit einem radial einwärts gerichteten Abstütz-Kragen (24) ausgebildet ist, an welchem das Dichtungselement (16) anliegt,
wobei das Dichtungselement (16) einen ersten Stützring (25), einen zweiten Stützring (26) und ein zwischen dem ersten Stützring (25) und dem zweiten Stützring (26) angeordnetes Dichtungsmittel (27) aufweist, wobei der zweite Stützring (26) an dem Abstütz-Kragen (24) anliegt, und
wobei das Dichtungselement (16) und das Gehäuse (12a, 12b, 12c, 12d) auf Basis der vorbestimmten Druckdifferenz relativ zueinander bewegbar gelagert sind.

2. Dichtungsvorrichtung (9a, 9b, 9c, 9d) nach Anspruch 1, wobei infolge der vorbestimmten Druckdifferenz das Gehäuse (12a, 12b, 12c, 12d) und das Dichtungselement (16) abdichtend gegeneinander verschiebbar gelagert sind.

3. Dichtungsvorrichtung (9a, 9b, 9c, 9d) nach einem der vorhergehenden Ansprüche, wobei das Dichtungselement (16) zumindest abschnittsweise an dem Gehäuse (12a, 12b, 12c, 12d) anliegend angeordnet ist.

4. Dichtungsvorrichtung (9a, 9b, 9c, 9d) nach einem der vorhergehenden Ansprüche, wobei das Dichtungselement (16) Kunststoff-Fasern, Polyaramid-Fasern, Kohlefasern oder Kevlar-Fasern aufweist.

5. Dichtungsvorrichtung (9a, 9b, 9c, 9d) nach einem der vorhergehenden Ansprüche, wobei wenigstens ein Dichtungskörper (21, 22, 23) vorgesehen ist, welcher zwischen dem Dichtungselement (16) und dem Gehäuse (12a, 12b, 12c, 12d) abdichtend angeordnet ist.

6. Dichtungsvorrichtung (9a, 9b, 9c, 9d) nach Anspruch 1, wobei wenigstens ein erstes Abdichtungsmittel (28) zwischen dem ersten Stützring (25) und dem Gehäuse (12a, 12b, 12c, 12d) dichtend angeordnet ist.

7. Dichtungsvorrichtung (9a, 9b, 9c, 9d) nach Anspruch 1 oder 6, wobei wenigstens ein zweites Abdichtungsmittel (29) zwischen dem zweiten Stützring (26) und dem Gehäuse (12a, 12b, 12c, 12d) dichtend angeordnet ist.

8. Dichtungsvorrichtung (9a, 9b, 9c, 9d) nach Anspruch 1, 6 oder 7, wobei der erste Stützring (25) mit einer in Richtung des zweiten Stützrings (26) wirkenden Federkraft beaufschlagt gelagert ist.

9. Dichtungsvorrichtung (9a, 9b, 9c, 9d) nach einem der vorhergehenden Ansprüche, wobei in der Umgehungsleitung (19) zwischen dem Stromauf-Ende (14a, 14b, 14c, 14d) und dem Drossel-Element (20) ein Filter-Element (34) angeordnet ist.

10. Dichtungssystem (8) mit
• einer Eingangs-Dichtungsvorrichtung (35) mit den Merkmalen der Dichtungsvorrichtung (9a, 9b, 9c, 9d) nach einem der Ansprüche 1 bis 9,
• einer Ausgangs-Dichtungsvorrichtung (36) mit den Merkmalen der Dichtungsvorrichtung (9a, 9b, 9c, 9d) nach einem der Ansprüche 1 bis 9, und
• einem im Querschnitt kreisrunden und sich in eine Axialrichtung erstreckenden Maschinenelement (7) einer Arbeitsmaschine (11), welche mit einem unter einem hohen Druck stehenden Arbeits-Fluid arbeitend ausgebildet ist,
wobei die Eingangs-Dichtungsvorrichtung (35) und die Ausgangs-Dichtungsvorrichtung (36) mit Bezug auf die Axialrichtung des Maschinenelements (7) hintereinanderliegend in Reihe angeordnet sind und das jeweilige Dichtungselement (16) der Eingangs-Dichtungsvorrichtung (35) und der Ausgangs-Dichtungsvorrichtung (36) an dem sich zu dem jeweiligen Dichtungselement (16) relativ bewegenden Maschinenelement (7) zumindest abschnittsweise abdichtend anliegen.

11. Dichtungssystem (8) nach Anspruch 10, wobei die Stromab-Druckkammer (18d) der in Strömungsrichtung des Leckage-Fluids betrachtet stromabliegenden Ausgangs-Dichtungsvorrichtung (36) mit einem Leckage-Fluid-Ablauf (37) verbunden ist.

12. Dichtungssystem (8) nach Anspruch 10 oder 11, wobei mit Bezug auf die Strömungsrichtung des Leckage-Fluids die Eingangs-Dichtungsvorrichtung (35) stromauf der Ausgangs-Dichtungsvorrichtung (36) liegend angeordnet ist, wobei die Stromab-Druckkammer (18a) der Eingangs-Dichtungsvorrichtung (35) der Stromauf-Druckkammer (17d) der Ausgangs-Dichtungsvorrichtung (36) entspricht.

13. Dichtungssystem (8) nach einem der Ansprüche 10 bis 12, wobei das Drossel-Element (20) der stromaufliegenden Eingangs-Dichtungsvorrichtung (35) einen Durchflussquerschnitt aufweist, welcher größer ist als ein Durchflussquerschnitt des Drossel-Elements (20) der stromabliegenden Ausgangs-Dichtungsvorrichtung (36).

14. Dichtungssystem (8) nach Anspruch 10 oder 11, wobei mit Bezug auf die Strömungsrichtung des Leckage-Fluids die Eingangs-Dichtungsvorrichtung (35) stromauf der Ausgangs-Dichtungsvorrichtung (36) liegend angeordnet ist, wobei zwischen der Eingangs-Dichtungsvorrichtung (35) und der Ausgangs-Dichtungsvorrichtung (36) wenigstens eine Zwischen-Dichtungsvorrichtung (39, 40) mit den Merkmalen der Dichtungsvorrichtung (9b, 9c) nach einem der Ansprüche 1 bis 10 angeordnet ist, und wobei das Dichtungselement (16) der wenigstens einen Zwischen-Dichtungsvorrichtung (39, 40) an dem sich zu dem Dichtungselement (16) der wenigstens einen Zwischen-Dichtungsvorrichtung (39, 40) relativ bewegenden Maschinenelement (7) zumindest abschnittsweise abdichtend anliegt.

15. Dichtungssystem (8) nach Anspruch 14, wobei die Eingangs-Dichtungsvorrichtung (35) und/oder die Ausgangs-Dichtungsvorrichtung (36) und/oder die wenigstens eine Zwischen-Dichtungsvorrichtung (39, 40) in einem Dichtungsgehäuse (10) aufgenommen sind.

16. Dichtungssystem (8) nach Anspruch 14 oder 15, wobei die Stromab-Druckkammer (18c) der wenigstens einen, benachbart zu der Ausgangs-Dichtungsvorrichtung (36) angeordneten Zwischen-Dichtungsvorrichtung (40) der Stromauf-Druckkammer (17d) der Ausgangs-Dichtungsvorrichtung (36) entspricht, und wobei die Stromauf-Druckkammer (17b) der wenigstens einen, benachbart zu der Eingangs-Dichtungsvorrichtung (35) angeordneten Zwischen-Dichtungsvorrichtung (39) der Stromab-Druckkammer (18a) der Eingangs-Dichtungsvorrichtung (35) entspricht.

17. Verfahren zum Abdichten einer Leckage-Strömung an einem im Querschnitt kreisrunden Maschinenelement (7) einer mit einem unter einem hohen Druck stehenden Arbeits-Fluid arbeitenden Arbeitsmaschine (11) unter Verwendung wenigstens einer Dichtungsvorrichtung (9a, 9b, 9c, 9d) nach einem der Ansprüche 1 bis 9,
• wobei das Dichtungselement (16) der wenigstens einen Dichtungsvorrichtung (9a, 9b, 9c, 9d) dichtend in Anlage an das im Querschnitt kreisrunde und sich in eine Axialrichtung erstreckende Maschinenelement (7) gebracht wird,
• wobei mittels des Leckage-Fluids der Leckage-Strömung ein erster Druck in der Stromauf-Druckkammer (17a, 17b, 17c, 17d) der wenigstens einen Dichtungsvorrichtung (9a, 9b, 9c, 9d) eingestellt wird,
• wobei mittels des in der Umgehungsleitung (19) angeordneten Drossel-Elements (20) ein zweiter, vorbestimmter Druck in der Stromab-Druckkammer (18a, 18b, 18c, 18d) der wenigstens einen Dichtungsvorrichtung (9a, 9b, 9c, 9d) eingestellt wird, und
• wobei durch eine durch den ersten Druck und den zweiten, vorbestimmten Druck erzielte Druckdifferenz das Dichtungselement (16) und das Gehäuse (12a, 12b, 12c, 12d) mit einer abdichtenden Kraft gegeneinander verschoben werden.

18. Verfahren nach Anspruch 17, wobei wenigstens eine weitere Dichtungsvorrichtung (9b, 9c, 9d) zusätzlich zu und stromab der wenigstens einen Dichtungsvorrichtung (9a) eingebaut wird, wobei die weitere zusätzliche Dichtungsvorrichtung (9b, 9c, 9d) dichtend in Anlage an das im Querschnitt kreisrunde und sich in eine Axialrichtung erstreckende Maschinenelement (7) gebracht wird, und wobei mit der stromaufliegenden Dichtungsvorrichtung (9a) eine Druckdifferenz erzielt wird, welche gleich der Druckdifferenz ist, welche mit der einen weiteren zusätzlichen Dichtungsvorrichtung (9b, 9c, 9d) erzielt wird.

## Claims

1. Sealing device (9a, 9b, 9c, 9d) for sealing a leakage flow on a machine element (7) which is circular in cross section of a working machine (11) working with a working fluid under high pressure, wherein the sealing device (9a, 9b, 9c, 9d) comprises:
• a tubular housing (12a, 12b, 12c, 12d) having an upstream end (14a, 14b, 14c, 14d) and a downstream end (15a, 15b, 15c, 15d) and through which the machine element (7) which is circular in cross section can extend,
• an upstream pressure chamber (17a, 17b, 17c, 17d) which is arranged at the upstream end (14a, 14b, 14c, 14d) of the housing (12a, 12b, 12c, 12d),
• a downstream pressure chamber (18a, 18b, 18c, 18d) which is arranged at the downstream end (15a, 15b, 15c, 15d) of the housing (12a, 12b, 12c, 12d),
• a sealing element (16) which is arranged between the upstream pressure chamber (17a, 17b, 17c, 17d) and the downstream pressure chamber (18a, 18b, 18c, 18d) and is mounted within the housing (12a, 12b, 12c, 12d) and which rests sealingly at least in portions against the machine element (7) moving relative to the sealing element (16),
• a bypass line (19) running around the sealing element (16), which bypass line is arranged to run at least in portions within the housing (12a, 12b, 12c, 12d) and which is designed to fluidly connect the upstream pressure chamber (17a, 17b, 17c, 17d) to the downstream pressure chamber (18a, 18b, 18c, 18d), and
• a throttle element (20) designed to reduce the pressure of a leakage fluid flowing from the upstream pressure chamber (17a, 17b, 17c, 17d) through the bypass line (19) to the downstream pressure chamber (18a, 18b, 18c, 18d) by a predetermined pressure difference, which throttle element (20) is arranged between the upstream pressure chamber (17a, 17b, 17c, 17d) and the downstream pressure chamber (18a, 18b, 18c, 18d) in the bypass line (19), wherein the leakage fluid is a part of the working fluid under high pressure,
wherein the housing (12a, 12b, 12c, 12d) is designed with a support collar (24) directed radially inwards at its downstream end (15a, 15b, 15c, 15d), against which support collar the sealing element (16) rests,
wherein the sealing element (16) has a first support ring (25), a second support ring (26), and a sealing means (27) which is arranged between the first support ring (25) and the second support ring (26), wherein the second support ring (26) rests against the support collar (24), and wherein the sealing element (16) and the housing (12a, 12b, 12c, 12d) are mounted such that they can be moved relative to one another
das Gehäuse (12a, 12b, 12c, 12d) auf Basis der vorbestimmten Druckdifferenz relativ zueinander bewegbar gelagert sind.

2. Sealing device (9a, 9b, 9c, 9d) according to claim 1, wherein, as a result of the predetermined pressure difference, the housing (12a, 12b, 12c, 12d) and the sealing element (16) are mounted such that they can be displaced in a sealing manner relative to one another.

3. Sealing device (9a, 9b, 9c, 9d) according to any of the preceding claims, wherein the sealing element (16) is arranged in contact with the housing (12a, 12b, 12c, 12d) at least in portions.

4. Sealing device (9a, 9b, 9c, 9d) according to any of the preceding claims, wherein the sealing element (16) has plastics material fibers, polyaramide fibers, carbon fibers, or Kevlar fibers.

5. Sealing device (9a, 9b, 9c, 9d) according to any of the preceding claims, wherein at least one sealing
body (21, 22, 23) is provided which is sealingly arranged between the sealing element (16) and the
housing (12a, 12b, 12c, 12d).

6. Sealing device (9a, 9b, 9c, 9d) according to claim 1, wherein at least one first sealing means (28) is sealingly arranged between the first support ring (25) and the housing (12a, 12b, 12c, 12d).

7. Sealing device (9a, 9b, 9c, 9d) according to claim 1 or 6, wherein at least one second sealing means (29) is sealingly arranged between the second support ring (26) and the housing (12a, 12b, 12c, 12d).

8. Sealing device (9a, 9b, 9c, 9d) according to claim 1, 6 or 7, wherein the first support ring (25) is mounted so that it is subjected to a spring force acting in the direction of the second support ring (26).

9. Sealing device (9a, 9b, 9c, 9d) according to any of the preceding claims, wherein a filter element (34) is arranged in the bypass line (19) between the upstream end (14a, 14b, 14c, 14d) and the throttle element (20).

10. Sealing system (8) comprising
• an inlet sealing device (35) having the features of the sealing device (9a, 9b, 9c, 9d) according to any of claims 1 to 9,
• an outlet sealing device (36) having the features of the sealing device (9a, 9b, 9c, 9d) according to any of claims 1 to 9, and
• a machine element (7), which is circular in cross section and extends in an axial direction, of a working machine (11) which is designed to work with a working fluid that is under high pressure,
wherein the inlet sealing device (35) and the outlet sealing device (36) are arranged one behind the other in series with respect to the axial direction of the machine element (7), and the corresponding sealing element (16) of the inlet sealing device (35) and the outlet sealing device (36) rest sealingly at least in portions against the machine element (7) moving relative to the corresponding sealing element (16).

11. Sealing system (8) according to claim 10, wherein the downstream pressure chamber (18d) of the downstream outlet sealing device (36), viewed in the direction of flow of the leakage fluid, is connected to a leakage fluid outlet (37).

12. Sealing system (8) according to claim 10 or 11, wherein the inlet sealing device (35) is arranged lying upstream of the outlet sealing device (36) with respect to the direction of flow of the leakage fluid, wherein the downstream pressure chamber (18a) of the inlet sealing device (35) corresponds to the upstream pressure chamber (17d) of the outlet sealing device (36).

13. Sealing system (8) according to any of claims 10 to 12, wherein the throttle element (20) of the upstream inlet sealing device (35) has a flow cross section which is larger than a flow cross section of the throttle element (20) of the downstream outlet sealing device (36).

14. Sealing system (8) according to claim 10 or 11, wherein the inlet sealing device (35) is arranged lying upstream of the outlet sealing device (36) with respect to the direction of flow of the leakage fluid, wherein at least one intermediate sealing device (39, 40) having the features of the sealing device (9b, 9c) according to any of claims 1 to 10 is arranged between the inlet sealing device (35) and the outlet sealing device (36), and wherein the sealing element (16) of the at least one intermediate sealing device (39, 40) rests sealingly at least in portions against the machine element (7) moving relative to the sealing element (16) of the at least one intermediate sealing device (39, 40).

15. Sealing system (8) according to claim 14, wherein the inlet sealing device (35) and/or the outlet sealing device (36) and/or the at least one intermediate sealing device (39, 40) are accommodated in a seal housing (10).

16. Sealing system (8) according to claim 14 or 15, wherein the downstream pressure chamber (18c) of the at least one intermediate sealing device (40) arranged adjacent to the outlet sealing device (36) corresponds to the upstream pressure chamber (17d32) of the outlet sealing device (36), and wherein the upstream pressure chamber (17b) of the at least one intermediate sealing device (39) arranged adjacent to the inlet sealing device (35) corresponds to the downstream pressure chamber (18a) of the inlet sealing device (35).

17. Method for sealing a leakage flow on a machine element (7) which is circular in cross section of a working machine (11) working with a working fluid under high pressure using at least one sealing device (9a, 9b, 9c, 9d) according to any of claims 1 to 9,
• wherein the sealing element (16) of the at least one sealing device (9a, 9b, 9c, 9d) is brought into sealing contact with the machine element (7), which is circular in cross section and extends in an axial direction,
• wherein a first pressure is set in the upstream pressure chamber (17a, 17b, 17c, 17d) of the at least one sealing device (9a, 9b, 9c, 9d) by means of the leakage fluid of the leakage flow,
• wherein a second, predetermined pressure is set in the downstream pressure chamber (18a, 18b, 18c, 18d) of the at least one sealing device (9a, 9b, 9c, 9d) by means of the throttle element (20) arranged in the bypass line (19), and
• wherein the sealing element (16) and the housing (12a, 12b, 12c, 12d) are displaced against one another with a sealing force by a pressure difference achieved by the first pressure and the second, predetermined pressure.

18. Method according to claim 17, wherein at least one further sealing device (9b, 9c, 9d) is installed in addition to and downstream of the at least one sealing device (9a), wherein the further additional sealing device (9b, 9c, 9d) is brought in sealing contact with the machine element (7), which is circular in cross section and extends in an axial direction, and wherein a pressure difference is achieved with the upstream sealing device (9a), which pressure difference is equal to the pressure difference which is achieved with the one further additional sealing device (9b, 9c, 9d).

## Revendications

1. Dispositif d'étanchéité (9a, 9b, 9c, 9d) pour étancher un écoulement de fuite sur un élément de machine (7) de section circulaire d'une machine de travail (11) fonctionnant avec un fluide de travail sous haute pression, le dispositif d'étanchéité (9a, 9b, 9c, 9d) comprenant :
• un boîtier (12a, 12b, 12c, 12d) de forme tubulaire, qui présente une extrémité amont (14a, 14b, 14c, 14d) et une extrémité aval (15a, 15b, 15c, 15d) et à travers lequel peut s'étendre l'élément de machine (7) de section circulaire,
• une chambre de pression amont ( 17a, 17b, 17c, 17d ), qui est disposée à l'extrémité amont (14a, 14b, 14c, 14d) du boîtier (12a, 12b, 12c, 12d),
• une chambre de pression aval ( 18a, 18b, 18c, 18d ) disposée à l'extrémité aval (15a, 15b, 15c, 15d) du boîtier (12a, 12b, 12c, 12d),
• un élément d'étanchéité (16) disposé entre la chambre de pression amont (17a, 17b, 17c, 17d) et la chambre de pression aval (18a, 18b, 18c, 18d), qui est logé à l'intérieur du boîtier (12a, 12b, 12c, 12d) et qui s'applique de manière étanche au moins par sections contre l'élément de machine (7) se déplaçant par rapport à l'élément d'étanchéité (16),
• une conduite de dérivation (19) réalisée en s'étendant autour de l'élément d'étanchéité (16), qui est disposée en s'étendant au moins par sections à l'intérieur du boîtier (12a, 12b, 12c, 12d) et qui est réalisée de manière à relier de façon fluidique la chambre de pression amont (17a, 17b, 17c, 17d) avec la chambre de pression aval (18a, 18b, 18c, 18d), et
• un élément d'étranglement (20) configuré pour réduire d'une différence de pression prédéterminée une pression d'un fluide de fuite s'écoulant de la chambre de pression amont (17a, 17b, 17c, 17d) à travers la conduite de dérivation (19) vers la chambre de pression aval (18a, 18b, 18c, 18d), qui est disposé entre la chambre de pression amont (17a, 17b, 17c, 17d) et la chambre de pression aval (18a, 18b, 18c, 18d) dans la conduite de dérivation (19), le fluide de fuite étant une partie du fluide de travail sous la haute pression,
le boîtier (12a, 12b, 12c, 12d) étant formé à son extrémité aval (15a, 15b, 15c, 15d) avec une collerette d'appui (24) dirigée radialement vers l'intérieur, contre laquelle s'appuie l'élément d'étanchéité (16),
l'élément d'étanchéité (16) comprenant une première bague d'appui (25), une deuxième bague d'appui (26) et un moyen d'étanchéité (27) disposé entre la première bague d'appui (25) et la deuxième bague d'appui (26), la deuxième bague d'appui (26) étant en appui contre le collet d'appui (24), et
dans lequel l'élément d'étanchéité (16) et le boîtier (12a, 12b, 12c, 12d) sont supportés de manière à pouvoir se déplacer l'un par rapport à l'autre sur la base de la différence de pression prédéterminée.

2. Dispositif d'étanchéité (9a, 9b, 9c, 9d) selon la revendication 1, dans lequel le boîtier (12a, 12b, 12c, 12d) et l'élément d'étanchéité (16) sont montés de manière à pouvoir se déplacer de manière étanche l'un par rapport à l'autre en raison de la différence de pression prédéterminée.

3. Dispositif d'étanchéité (9a, 9b, 9c, 9d) selon l'une quelconque des revendications précédentes, dans lequel l'élément d'étanchéité (16) est disposé au moins par portions en appui sur le boîtier (12a, 12b, 12c, 12d).

4. Dispositif d'étanchéité (9a, 9b, 9c, 9d) selon l'une quelconque des revendications précédentes, dans lequel l'élément d'étanchéité (16) comprend des fibres de matière plastique, des fibres de polyaramide, des fibres de carbone ou des fibres de Kevlar.

5. Dispositif d'étanchéité (9a, 9b, 9c, 9d) selon l'une des revendications précédentes, dans lequel il est prévu au moins un corps d'étanchéité (21, 22, 23) qui est disposé de manière étanche entre l'élément d'étanchéité (16) et le boîtier (12a, 12b, 12c, 12d).

6. Dispositif d'étanchéité (9a, 9b, 9c, 9d) selon la revendication 1, dans lequel au moins un premier moyen d'étanchéité (28) est disposé de manière étanche entre la première bague d'appui (25) et le boîtier (12a, 12b, 12c, 12d).

7. Dispositif d'étanchéité (9a, 9b, 9c, 9d) selon la revendication 1 ou 6, dans lequel au moins un deuxième moyen d'étanchéité (29) est disposé de manière étanche entre la deuxième bague d'appui (26) et le boîtier (12a, 12b, 12c, 12d).

8. Dispositif d'étanchéité (9a, 9b, 9c, 9d) selon la revendication 1, 6 ou 7, dans lequel la première bague d'appui (25) est montée avec une force élastique agissant en direction de la deuxième bague d'appui (26).

9. Dispositif d'étanchéité (9a, 9b, 9c, 9d) selon l'une des revendications précédentes, dans lequel un élément filtrant (34) est disposé dans la conduite de dérivation (19) entre l'extrémité amont (14a, 14b, 14c, 14d) et l'élément d'étranglement (20).

10. Système d'étanchéité (8) avec
• un dispositif d'étanchéité d'entrée (35) ayant les caractéristiques du dispositif d'étanchéité (9a, 9b, 9c, 9d) selon l'une des revendications 1 à 9,
• un dispositif d'étanchéité de sortie (36) ayant les caractéristiques du dispositif d'étanchéité (9a, 9b, 9c, 9d) selon l'une des revendications 1 à 9, et
• un élément de machine (7) de section transversale circulaire et s'étendant dans une direction axiale d'une machine de travail (11), qui est conçue pour travailler avec un fluide de travail sous haute pression,
où le dispositif d'étanchéité d'entrée (35) et le dispositif d'étanchéité de sortie (36) sont disposés en série l'un derrière l'autre par rapport à la direction axiale de l'élément de machine (7) et l'élément d'étanchéité respectif (16) du dispositif d'étanchéité d'entrée (35) et du dispositif d'étanchéité de sortie (36) s'applique de manière étanche au moins par sections sur l'élément de machine (7) se déplaçant par rapport à l'élément d'étanchéité respectif (16).

11. Système d'étanchéité (8) selon la revendication 10, dans lequel la chambre de pression aval (18d) du dispositif d'étanchéité de sortie (36) disposé en aval, vu dans le sens d'écoulement du fluide de fuite, est reliée à une évacuation de fluide de fuite (37).

12. Système d'étanchéité (8) selon la revendication 10 ou 11, dans lequel, par rapport au sens d'écoulement du fluide de fuite, le dispositif d'étanchéité d'entrée (35) est disposé en amont du dispositif d'étanchéité de sortie (36), la chambre de pression aval (18a) du dispositif d'étanchéité d'entrée (35) correspondant à la chambre de pression amont (17d) du dispositif d'étanchéité de sortie (36).

13. Système d'étanchéité (8) selon l'une quelconque des revendications 10 à 12, dans lequel l'élément d'étranglement (20) du dispositif d'étanchéité d'entrée amont (35) présente une section d'écoulement qui est supérieure à une section d'écoulement de l'élément d'étranglement (20) du dispositif d'étanchéité de sortie aval (36).

14. Système d'étanchéité (8) selon la revendication 10 ou 11, dans lequel, par rapport au sens d'écoulement du fluide de fuite, le dispositif d'étanchéité d'entrée (35) est disposé en amont du dispositif d'étanchéité de sortie (36), au moins un dispositif d'étanchéité intermédiaire (39, 40) présentant les caractéristiques du dispositif d'étanchéité (9b, 9c) selon l'une des revendications 1 à 10 est disposé, et dans lequel l'élément d'étanchéité (16) du au moins un dispositif d'étanchéité intermédiaire (39, 40) s'applique de manière étanche au moins par sections contre l'élément de machine (7) se déplaçant par rapport à l'élément d'étanchéité (16) du au moins un dispositif d'étanchéité intermédiaire (39, 40).

15. Système d'étanchéité (8) selon la revendication 14, dans lequel le dispositif d'étanchéité d'entrée (35) et/ou le dispositif d'étanchéité de sortie (36) et/ou le au moins un dispositif d'étanchéité intermédiaire (39, 40) sont logés dans un boîtier d'étanchéité (10).

16. Système d'étanchéité (8) selon la revendication 14 ou 15, dans lequel la chambre de pression aval (18c) de l'au moins un dispositif d'étanchéité intermédiaire (40) disposé à proximité du dispositif d'étanchéité de sortie (36) correspond à la chambre de pression amont (17d) du dispositif d'étanchéité de sortie (36), et dans lequel la chambre de pression amont (17b) de l'au moins un dispositif d'étanchéité intermédiaire (39) disposé à proximité du dispositif d'étanchéité d'entrée (35) correspond à la chambre de pression aval (18a) du dispositif d'étanchéité d'entrée (35).

17. Procédé d'étanchéification d'un flux de fuite sur un élément de machine (7) de section circulaire d'une machine de travail (11) fonctionnant avec un fluide de travail sous haute pression, en utilisant au moins un dispositif d'étanchéité (9a, 9b, 9c, 9d) selon l'une des revendications 1 à 9,
• dans lequel l'élément d'étanchéité (16) du au moins un dispositif d'étanchéité (9a, 9b, 9c, 9d) est amené en contact de manière étanche avec l'élément de machine (7) de section circulaire et s'étendant dans une direction axiale,
• une première pression dans la chambre de pression amont (17a, 17b, 17c, 17d) du au moins un dispositif d'étanchéité (9a, 9b, 9c, 9d) étant réglée au moyen du fluide de fuite de l'écoulement de fuite,
• dans lequel, au moyen de l'élément d'étranglement (20) disposé dans la conduite de dérivation (19), une deuxième pression prédéterminée est réglée dans la chambre de pression aval (18a, 18b, 18c, 18d) du au moins un dispositif d'étanchéité (9a, 9b, 9c, 9d), et
• dans lequel, par une différence de pression obtenue par la première pression et la deuxième pression prédéterminée, l'élément d'étanchéité (16) et le boîtier (12a, 12b, 12c, 12d) sont déplacés l'un par rapport à l'autre avec une force d'étanchéité.

18. Procédé selon la revendication 17, dans lequel au moins un autre dispositif d'étanchéité (9b, 9c, 9d) est installé en plus et en aval dudit au moins un dispositif d'étanchéité (9a), ledit autre dispositif d'étanchéité supplémentaire (9b, 9c, 9d) est amené en contact de manière étanche avec l'élément de machine (7) de section circulaire et s'étendant dans une direction axiale, et dans lequel on obtient avec le dispositif d'étanchéité (9a) disposé en amont une différence de pression qui est égale à la différence de pression obtenue avec le dispositif d'étanchéité supplémentaire (9b, 9c, 9d).
